# EUROPEAN PATENT APPLICATION

(11) **EP 4 737 517 A1**
(43) Date of publication of application: **06.05.2026**
(21) Application number: 23943794.0
(22) Date of filing: 07.12.2023
(51) Int. Cl.: C08L 65/00, B60C 1/00, C08C 19/26, C08G 61/08, C08K 3/013, C08K 3/04, C08L 15/00

(54) **RUBBER COMPOSITION FOR TIRE, AND TIRE**

(30) Priority: 30.06.2023 JP 2023108698
(71) Applicant: BRIDGESTONE CORPORATION, Chuo-ku Tokyo 104-8340 (JP)
(72) Inventor: TARUTANI Yasunori, Tokyo 104-8340 (JP); HAMATANI Satoshi, Tokyo 104-8340 (JP); SAITO Koichi, Tokyo 104-8340 (JP); TAKAHASHI Ayaka, Tokyo 104-8340 (JP); NAKATANI Kenji, Tokyo 104-8340 (JP); YUKIMURA Noriaki, Tokyo 104-8340 (JP)
(74) Representative: Marks & Clerk LLP
(86) International application number: PCT/JP2023/043879
(87) International publication number: WO 2025/004408

(57) **Abstract**

The object is to provide a rubber composition for a tire capable of achieving a good balance between processability and both high fuel efficiency and wear resistance when adopted in a tire, and the solution is a rubber composition for a tire containing a rubber component and a filler, wherein the rubber component includes a copolymer of cyclopentene and a norbornene compound represented by the following general formula (1): 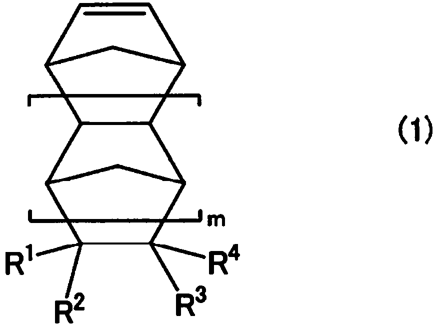 (in the formula, R¹ to R⁴ each independently represent a hydrogen atom, a hydrocarbon group having 1 to 20 carbon atoms, or a substituent containing a halogen atom, a silicon atom, an oxygen atom, or a nitrogen atom, R² and R³ may be bonded to each other to form a ring, and m is an integer of 0 to 2) and a modified polymer.

## Description

### TECHNICAL FIELD

The present disclosure relates to a rubber composition for a tire and a tire.

### BACKGROUND

In connection with the recent global movement toward regulation of carbon dioxide emissions due to heightened interest in environmental issues, there is an increasing demand for improved fuel efficiency in automobiles. To meet such demands, improvement in tire performance, specifically enhancement of high fuel efficiency (i.e., reduction of rolling resistance), is also required.

In addition, from the perspective of tire economy, in the development of rubber compositions for tires, not only high fuel efficiency but also improvement of wear resistance is required.

However, in general, high fuel efficiency and wear resistance are in a trade-off relationship, and it is difficult to achieve both simultaneously. For example, a method is known in which the amount of filler is increased to improve wear resistance, but increasing the amount of filler leads to deterioration in the dispersion state of the filler, resulting in a problem of worsened high fuel efficiency. Furthermore, there is also a problem in that the unvulcanized viscosity of the rubber composition increases, thereby deteriorating processability. Thus, in general, it is difficult to achieve a good balance among high fuel efficiency, wear resistance, and processability.

In response, PTL 1 and PTL 2 below disclose rubber compositions for passenger vehicle tires and rubber compositions for heavy-duty truck and bus tires, which contain a specific long-chain branched cyclopentene ring-opening rubber (LCB-CPR). These rubber compositions are said to be effective in reducing rolling resistance of tires, improving wet skid resistance, and improving wear resistance.

### CITATION LIST

### Patent Literature

PTL 1: WO 2021/178233 A1
PTL 2: WO 2021/178235 A1

### SUMMARY

### (Technical Problem)

However, as a result of investigations by the present inventors, it was found that even with the techniques described in PTL 1 and PTL 2 above, it is difficult to achieve a good balance between the processability of the rubber composition and both the high fuel efficiency and wear resistance of a tire to which the rubber composition is applied, and that there remains room for improvement.

Accordingly, the present disclosure has as its object to solve the above problems of the prior art and to provide a rubber composition for a tire that can achieve a good balance between processability and both high fuel efficiency and wear resistance of a tire when applied to a tire.

Further, the present disclosure has as a further object to provide a tire that achieves a good balance among high fuel efficiency, wear resistance, and productivity.

### (Solution to Problem)

The essential configuration of the rubber composition for a tire and the tire of the present disclosure for solving the above problems is as follows.
[1] A rubber composition for a tire comprising a rubber component and a filler,
   wherein the rubber component includes:
   a copolymer of cyclopentene and a norbornene compound represented by general formula (1), shown below: 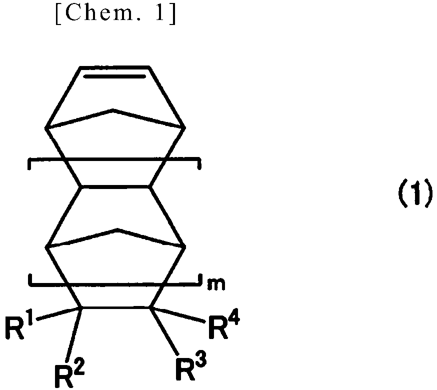 where, in general formula (1), R¹ to R⁴ each independently represent a hydrogen atom, a hydrocarbon group having 1 to 20 carbon atoms, or a substituent containing a halogen atom, a silicon atom, an oxygen atom, or a nitrogen atom, R² and R³ may be bonded to each other to form a ring, and m is an integer of 0 to 2; and
   a modified polymer.
[2] The rubber composition for a tire according to [1], wherein the norbornene compound represented by the general formula (1) is 2-norbornene and/or dicyclopentadiene.
[3] The rubber composition for a tire according to [1] or [2], wherein the content of the copolymer of cyclopentene and the norbornene compound is 20 parts by mass to 90 parts by mass per 100 parts by mass of the rubber component.
[4] The rubber composition for a tire according to any one of [1] to [3], wherein the copolymer of cyclopentene and the norbornene compound has a weight-average molecular weight (Mw) of 200,000 to 1,000,000.
[5] The rubber composition for a tire according to any one of [1] to [4], wherein the copolymer of cyclopentene and the norbornene compound has a content ratio of structural units derived from cyclopentene of 20% by mass to 75% by mass.
[6] The rubber composition for a tire according to any one of [2] to [5], wherein the copolymer of cyclopentene and the norbornene compound has a content ratio of structural units derived from 2-norbornene of 10% by mass to 60% by mass.
[7] The rubber composition for a tire according to any one of [2] to [6], wherein the copolymer of cyclopentene and the norbornene compound has a content ratio of structural units derived from dicyclopentadiene of 10% by mass to 60% by mass.
[8] The rubber composition for a tire according to any one of [1] to [7], wherein the content of the modified polymer is 5 parts by mass to 90 parts by mass per 100 parts by mass of the rubber component.
[9] The rubber composition for a tire according to any one of [1] to [8], wherein the modified polymer has a functional group containing nitrogen.
[10] The rubber composition for a tire according to any one of [1] to [9], wherein the modified polymer is a modified butadiene rubber or a modified styrene-butadiene rubber.
[11] The rubber composition for a tire according to any one of [1] to [10], wherein the modified polymer is a modified butadiene rubber.
[12] The rubber composition for a tire according to any one of [1] to [11], wherein the filler includes carbon black.
[13] A tire comprising the rubber composition for a tire according to any one of [1] to [12].

### (Advantageous Effect)

According to the present disclosure, it is possible to provide a rubber composition for a tire that can achieve a good balance between processability and both high fuel efficiency and wear resistance of a tire when applied to a tire.

Further, according to the present disclosure, it is possible to provide a tire that achieves a good balance among high fuel efficiency, wear resistance, and productivity.

### DETAILED DESCRIPTION

Hereinafter, the rubber composition for a tire and the tire of the present disclosure will be exemplified and described in detail based on embodiments thereof.

### <Definitions>

The compounds described in the present specification may be partially or entirely derived from fossil resources, may be derived from biological resources such as plant resources, or may be derived from recycled resources such as used tires. Further, they may be derived from a mixture of any two or more of fossil resources, biological resources, and recycled resources.

### <Rubber Composition for Tire>

The rubber composition for a tire of the present embodiment includes a rubber component and a filler. In the rubber composition for a tire of the present embodiment, the rubber component includes:
a copolymer of cyclopentene and a norbornene compound represented by the following general formula (1) (hereinafter also simply referred to as a "copolymer of cyclopentene and a norbornene compound" or a "copolymer"): 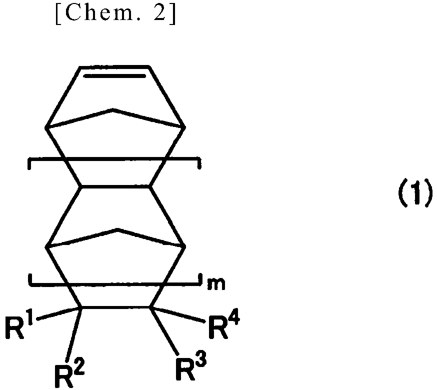 [in the formula, R¹ to R⁴ each independently represent a hydrogen atom, a hydrocarbon group having 1 to 20 carbon atoms, or a substituent containing a halogen atom, a silicon atom, an oxygen atom, or a nitrogen atom; R² and R³ may be bonded to each other to form a ring; and m is an integer of 0 to 2]; and
a polymer that has been modified (hereinafter also simply referred to as a "modified polymer").

In the rubber composition for a tire of the present embodiment, the copolymer of cyclopentene and the norbornene compound is characterized not only by having crosslinking points but also by entanglement between polymer chains.

Generally, when a filler is blended into a rubber component, a reinforcement layer composed of the filler and the rubber component is formed around the filler, and this reinforcement layer contributes to improving the reinforcement properties of the rubber composition, thereby enhancing wear resistance and the like.

In contrast, in the rubber composition for a tire of the present embodiment, since the rubber component includes the copolymer of cyclopentene and the norbornene compound, the reinforcement layer formed around the filler is specifically increased due to the above-described entanglement between polymer chains, so that wear resistance can be sufficiently improved.

Furthermore, in the rubber composition for a tire of the present embodiment, since the rubber component includes a modified polymer, and the modified polymer has high affinity with the filler and can improve the dispersibility of the filler, it is possible to improve the high fuel efficiency, wear resistance, and processability of the rubber composition.

Accordingly, the rubber composition for a tire of the present embodiment can achieve a good balance between processability and both high fuel efficiency and wear resistance when applied to a tire.

### (Rubber Component)

The rubber composition for a tire of the present embodiment includes a rubber component, and the rubber component imparts rubber elasticity to the composition. The rubber component of the rubber composition for a tire of the present embodiment includes a copolymer of cyclopentene and a norbornene compound represented by the above general formula (1), and a modified polymer, and may further include other rubbers.

### - Copolymer of Cyclopentene and Norbornene Compound -

The copolymer of cyclopentene and the norbornene compound includes structural units derived from cyclopentene and structural units derived from the norbornene compound represented by the above general formula (1). In a preferred embodiment, the copolymer of cyclopentene and the norbornene compound is a ring-opening copolymer, and in particular, a cyclopentene ring-opening copolymer.

In the above general formula (1), R¹ to R⁴ each independently represent a hydrogen atom, a hydrocarbon group having 1 to 20 carbon atoms, or a substituent containing a halogen atom, a silicon atom, an oxygen atom, or a nitrogen atom; R² and R³ may be bonded to each other to form a ring; and m is an integer of 0 to 2. Here, examples of the hydrocarbon group having 1 to 20 carbon atoms include: alkyl groups such as methyl group, ethyl group, n-propyl group, isopropyl group, n-butyl group, isobutyl group, sec-butyl group, tert-butyl group, neopentyl group, hexyl group, octyl group, and the like; alkenyl groups such as vinyl group, allyl group, 2-pentenyl group, 3-pentenyl group, 4-methyl-3-pentenyl group, and the like; aryl groups such as phenyl group, tolyl group, 2,6-dimethylphenyl group, 2,6-diisopropylphenyl group, naphthyl group, and the like; aralkyl groups such as benzyl group, phenethyl group, and the like.

Examples of the norbornene compound represented by the above general formula (1) include:
unsubstituted or hydrocarbon-substituted bicyclo[2.2.1]hept-2-enes such as 2-norbornene, 5-methyl-2-norbornene, 5-ethyl-2-norbornene, 5-butyl-2-norbornene, 5-hexyl-2-norbornene, 5-decyl-2-norbornene, 5-cyclohexyl-2-norbornene, 5-cyclopentyl-2-norbornene, 5-ethylidene-2-norbornene, 5-vinyl-2-norbornene, 5-propenyl-2-norbornene, 5-cyclohexenyl-2-norbornene, 5-cyclopentenyl-2-norbornene, 5-phenyl-2-norbornene, tetracyclo[9.2.1.0^{2,10}.0^{3,8}]tetradeca-3,5,7,12-tetraene (also called "1,4-methano-1,4,4a,9a-tetrahydro-9H-fluorene"), tetracyclo[10.2.1.0 ^{2,11}.0^{4,9}]pentadeca-4,6,8,13-tetraene (also called "1,4-methano-1,4,4a,9,9a,10-hexahydroanthracene"), dicyclopentadiene, methyldicyclopentadiene, dihydrodicyclopentadiene (also called "tricyclo[5.2.1.0^{2,6}]deca-8-ene"), and the like;
unsubstituted or hydrocarbon-substituted tetracyclo[6.2.1.1^{3,6}.0^{2,7}]dodeca-4-enes such as tetracyclo[6.2.1.1^{3,6}.0^{2,7}]dodeca-4-ene, 9-methyltetracyclo[6.2.1.1^{3,6}.0^{2,7}]dodeca-4-ene, 9-ethyltetracyclo[6.2.1.1^{3,6}.0^{2,7}]dodeca-4-ene, 9-cyclohexyltetracyclo[6.2.1.1^{3,6}.0^{2,7}]dodeca-4-ene, 9-cyclopentyltetracyclo[6.2.1.1^{3,6}.0^{2,7}]dodeca-4-ene, 9-methylenetetracyclo[6.2.1.1^{3,6}.0^{2,7}]dodeca-4-ene, 9-ethylidenetetracyclo[6.2.1.1^{3,6}.0^{2,7}]dodeca-4-ene, 9-vinyltetracyclo[6.2.1.1^{3,6}.0^{2,7}]dodeca-4-ene, 9-propenyltetracyclo[6.2.1.1^{3,6}.0^{2,7}]dodeca-4-ene, 9-cyclohexenyltetracyclo[6.2.1.1^{3,6}.0^{2,7}]dodeca-4-ene, 9-cyclopentenyltetracyclo[6.2.1.1^{3,6}.0^{2,7}]dodeca-4-ene, 9-phenyltetracyclo[6.2.1.1^{3,6}.0^{2,7}]dodeca-4-ene, and the like;
bicyclo[2.2.1]hept-2-enes having an alkoxycarbonyl group such as 5-norbornene-2-carboxylic acid methyl ester, 5-norbornene-2-carboxylic acid ethyl ester, 2-methyl-5-norbornene-2-carboxylic acid methyl ester, 2-methyl-5-norbornene-2-carboxylic acid ethyl ester, and the like;
tetracyclo[6.2.1.1^{3,6}.0^{2,7}]dodeca-4-enes having an alkoxycarbonyl group such as tetracyclo[6.2.1.1^{3,6}.0^{2,7}]dodeca-9-ene-4-carboxylic acid methyl ester, 4-methyltetracyclo[6.2.1.1^{3,6}.0^{2,7}]dodeca-9-ene-4-carboxylic acid methyl ester, and the like;
bicyclo[2.2.1]hept-2-enes having a hydroxycarbonyl group or an acid anhydride group such as 5-norbornene-2-carboxylic acid, 5-norbornene-2,3-dicarboxylic acid, 5-norbornene-2,3-dicarboxylic acid anhydride, and the like;
tetracyclo[6.2.1.1^{3,6}.0^{2,7}]dodeca-4-enes having a hydroxycarbonyl group or an acid anhydride group such as tetracyclo[6.2.1.1^{3,6}.0^{2,7}]dodeca-9-ene-4-carboxylic acid, tetracyclo[6.2.1.1^{3,6}.0^{2,7}]dodeca-9-ene-4,5-dicarboxylic acid, tetracyclo[6.2.1.1^{3,6}.0^{2,7}]dodeca-9-ene-4,5-dicarboxylic acid anhydride, and the like;
bicyclo[2.2.1]hept-2-enes having a hydroxyl group such as 5-hydroxy-2-norbornene, 5-hydroxymethyl-2-norbornene, 5,6-di(hydroxymethyl)-2-norbornene, 5,5-di(hydroxymethyl)-2-norbornene, 5-(2-hydroxyethoxycarbonyl)-2-norbornene, 5-methyl-5-(2-hydroxyethoxycarbonyl)-2-norbornene, and the like;
tetracyclo[6.2.1.1^{3,6}.0^{2,7}]dodeca-4-enes having a hydroxyl group such as tetracyclo[6.2.1.1^{3,6}.0^{2,7}]dodeca-9-ene-4-methanol, tetracyclo[6.2.1.1^{3,6}.0^{2,7}]dodeca-9-ene-4-ol, and the like;
bicyclo[2.2.1]hept-2-enes having a hydrocarbonyl group such as 5-norbornene-2-carbaldehyde, and the like;
tetracyclo[6.2.1.1^{3,6}.0^{2,7}]dodeca-4-enes having a hydrocarbonyl group such as tetracyclo[6.2.1.1^{3,6}.0^{2,7}]dodeca-9-ene-4-carbaldehyde, and the like;
bicyclo[2.2.1]hept-2-enes having both an alkoxycarbonyl group and a hydroxycarbonyl group such as 3-methoxycarbonyl-5-norbornene-2-carboxylic acid, and the like;
bicyclo[2.2.1]hept-2-enes having a carbonyloxy group such as 5-norbornene-2-yl acetate, 2-methyl-5-norbornene-2-yl acetate, 5-norbornene-2-yl acrylate, 5-norbornene-2-yl methacrylate, and the like;
tetracyclo[6.2.1.1^{3,6}.0^{2,7}]dodeca-4-enes having a carbonyloxy group such as 9-tetracyclo[6.2.1.1^{3,6}.0^{2,7}]dodeca-4-enyl acetate, 9-tetracyclo[6.2.1.1^{3,6}.0^{2,7}]dodeca-4-enyl acrylate, 9-tetracyclo[6.2.1.1^{3,6}.0^{2,7}]dodeca-4-enyl methacrylate, and the like;
bicyclo[2.2.1]hept-2-enes having a functional group containing a nitrogen atom such as 5-norbornene-2-carbonitrile, 5-norbornene-2-carboxamide, 5-norbornene-2,3-dicarboximide, and the like;
tetracyclo[6.2.1.1^{3,6}.0^{2,7}]dodeca-4-enes having a functional group containing a nitrogen atom such as tetracyclo[6.2.1.1^{3,6}.0^{2,7}]dodeca-9-ene-4-carbonitrile, tetracyclo[6.2.1 1^{3,6}.0^{2,7}]dodeca-9-ene-4-carboxamide, tetracyclo[6.2.1 1^{3,6}.0^{2,7}]dodeca-9-ene-4,5-dicarboximide, and the like;
bicyclo[2.2.1]hept-2-enes having a halogen atom such as 5-chloro-2-norbornene, and the like;
tetracyclo[6.2.1.1^{3,6}.0^{2,7}]dodeca-4-enes having a halogen atom such as 9-chlorotetracyclo[6.2.1.1^{3,6}.0^{2,7}]dodeca-4-ene, and the like;
bicyclo[2.2.1]hept-2-enes having a functional group containing a silicon atom such as 5-trimethoxysilyl-2-norbornene, 5-triethoxysilyl-2-norbornene, and the like;
tetracyclo[6.2.1.1^{3,6}.0^{2,7}]dodeca-4-enes having a functional group containing a silicon atom such as 4-trimethoxysilyltetracyclo[6.2.1.1^{3,6}.0^{2,7}]dodeca-9-ene, 4-triethoxysilyltetracyclo[6.2.1.1^{3,6}.0^{2,7}]dodeca-9-ene, and the like.
The norbornene compound may be used alone or in combination of two or more kinds.

As the norbornene compound represented by the above general formula (1), those in which m in the above general formula (1) is 0 or 1 are preferred, and those in which m is 0 are more preferred. Further, in the above general formula (1), R¹ to R⁴ may be the same or different.

Among the norbornene compounds represented by the above general formula (1), from the viewpoint of high fuel efficiency and wear resistance of the rubber composition, it is preferred that R¹ to R⁴ in the above general formula (1) are hydrogen atoms, chain hydrocarbon groups having 1 to 20 carbon atoms, or substituents containing a halogen atom, a silicon atom, an oxygen atom, or a nitrogen atom. In this case, R¹ to R⁴ are not particularly limited so long as they are groups that are not bonded to each other and do not form a ring and may be the same or different, with hydrogen atoms or alkyl groups having 1 to 3 carbon atoms being preferred as R¹ to R⁴. Also, in this case, those in which m is 0 or 1 are preferred, and those in which m is 0 are more preferred. As norbornene compounds in which R¹ to R⁴ in the above general formula (1) are hydrogen atoms, chain hydrocarbon groups having 1 to 20 carbon atoms, or substituents containing a halogen atom, a silicon atom, an oxygen atom, or a nitrogen atom, unsubstituted or hydrocarbon-substituted bicyclo[2.2.1]hept-2-enes are preferred, and among them, 2-norbornene is particularly preferred.

Further, as the norbornene compound represented by the above general formula (1), compounds in which R² and R³ are bonded to each other to form a ring are also preferred. Here, specific examples of the ring structure formed by bonding R² and R³ to each other include cyclopentane ring, cyclopentene ring, cyclohexane ring, cyclohexene ring, benzene ring, and the like, which may form a polycyclic structure and may further have substituents. Among these, cyclopentane ring, cyclopentene ring, and benzene ring are preferred, and in particular, compounds having a cyclopentene ring alone, or compounds having a polycyclic structure of a cyclopentane ring and a benzene ring are preferred. Note that R¹ and R⁴ other than R² and R³ forming the ring structure may be the same or different, and hydrogen atoms or alkyl groups having 1 to 3 carbon atoms are preferred. Also, in this case, those in which m is 0 are preferred. As norbornene compounds in which R² and R³ in the above general formula (1) are bonded to each other to form a ring, unsubstituted or hydrocarbon-substituted bicyclo[2.2.1]hept-2-enes are preferred, and among them, dicyclopentadiene is particularly preferred.

In the copolymer of cyclopentene and the norbornene compound, the content ratio of structural units derived from cyclopentene is preferably 20% by mass to 75% by mass, more preferably 25% by mass to 70% by mass, still more preferably 30% by mass to 65% by mass, and particularly preferably 35% by mass to 60% by mass, relative to all repeating structural units of the copolymer. By setting the content ratio of structural units derived from cyclopentene in the copolymer to a range of 20% by mass to 75% by mass, it is possible to further improve the high fuel efficiency and wear resistance of the rubber composition containing the copolymer.

In the copolymer of cyclopentene and the norbornene compound, the content ratio of structural units derived from the norbornene compound represented by the above general formula (1) is preferably 10% by mass to 80% by mass, more preferably 20% by mass to 70% by mass, still more preferably 25% by mass to 65% by mass, and particularly preferably 40% by mass to 65% by mass, relative to all repeating structural units of the copolymer. By setting the content ratio of structural units derived from the norbornene compound represented by the general formula (1) in the copolymer to a range of 10% by mass to 80% by mass, it is possible to further improve the high fuel efficiency and wear resistance of the rubber composition containing the copolymer.

In the copolymer of cyclopentene and the norbornene compound, it is preferred that the norbornene compound represented by the above general formula (1) is 2-norbornene and/or dicyclopentadiene. Since 2-norbornene and dicyclopentadiene are easily available, a copolymer of cyclopentene and 2-norbornene and/or dicyclopentadiene is easily obtainable. Therefore, a rubber composition for a tire containing a copolymer of cyclopentene and 2-norbornene and/or dicyclopentadiene is advantageous in terms of cost.

When 2-norbornene is used as the norbornene compound represented by the above general formula (1), it is preferred that the content ratio of structural units derived from 2-norbornene is 10% by mass to 60% by mass, and more preferably 20% by mass to 60% by mass, relative to all repeating structural units of the copolymer of cyclopentene and the norbornene compound. By setting the content ratio of structural units derived from 2-norbornene in the copolymer to a range of 10% by mass to 60% by mass, it is possible to further improve the high fuel efficiency and wear resistance of the rubber composition containing the copolymer.

When dicyclopentadiene is used as the norbornene compound represented by the above general formula (1), it is preferable that, in the copolymer of cyclopentene and the norbornene compound, the content ratio of structural units derived from dicyclopentadiene is 10% by mass to 60% by mass, more preferably 20% by mass to 50% by mass, relative to all repeating structural units of the copolymer. By setting the content ratio of structural units derived from dicyclopentadiene in the copolymer to the range of 10% by mass to 60% by mass, it is possible to further improve the high fuel efficiency and wear resistance of the rubber composition containing the copolymer.

In one embodiment, as the copolymer of cyclopentene and the norbornene compound, a terpolymer of cyclopentene (CP), 2-norbornene (NB), and dicyclopentadiene (DCPD) may be used. The terpolymer of cyclopentene, 2-norbornene, and dicyclopentadiene has a significant effect in improving the high fuel efficiency of the rubber composition.

The copolymer of cyclopentene and the norbornene compound may be a copolymer of cyclopentene and the norbornene compound represented by the above general formula (1), further copolymerized with other monomers that are copolymerizable therewith. Examples of such other monomers include: cyclic monoolefins such as cyclopropene, cyclobutene, methylcyclopentene, cyclohexene, methylcyclohexene, cycloheptene, and cyclooctene; cyclic diolefins such as cyclohexadiene, methylcyclohexadiene, cyclooctadiene, and methylcyclooctadiene; and polycyclic cycloolefins having an aromatic ring such as phenylcyclooctene, 5-phenyl-1,5-cyclooctadiene, and phenylcyclopentene. The content ratio of structural units derived from other monomers in the copolymer of cyclopentene and the norbornene compound is preferably 40% by mass or less, more preferably 30% by mass or less, relative to all repeating structural units of the copolymer, and it is particularly preferable that structural units derived from other monomers are substantially not contained.

The copolymer of cyclopentene and the norbornene compound preferably has a weight-average molecular weight (Mw) of 200,000 to 1,000,000, more preferably 200,000 to 800,000, still more preferably 200,000 to 700,000, and particularly preferably 200,000 to 600,000. A copolymer having a weight-average molecular weight (Mw) in the range of 200,000 to 1,000,000 is easy to produce and also has good processability (operability). Further, by setting the weight-average molecular weight (Mw) of the copolymer to the range of 200,000 to 1,000,000, it is possible to further improve the high fuel efficiency and wear resistance of the rubber composition containing the copolymer.

In addition, the copolymer of cyclopentene and the norbornene compound preferably has a ratio of weight-average molecular weight (Mw) to number-average molecular weight (Mn) (Mw/Mn, also referred to as "molecular weight distribution") of 1.0 to 5.0, more preferably 1.5 to 2.9, still more preferably 1.5 to 2.5, and particularly preferably 1.5 to 2.3.

Here, the weight-average molecular weight (Mw) and number-average molecular weight (Mn) of the copolymer are polystyrene-equivalent values, as measured by gel permeation chromatography (GPC).

The copolymer of cyclopentene and the norbornene compound preferably has a cis/trans ratio of 0/100 to 60/40, more preferably 5/95 to 55/45, still more preferably 10/90 to 50/50, and particularly preferably 15/85 to 39/61. The cis/trans ratio refers to the ratio (cis/trans) of the content of cis structures and trans structures of double bonds present in the repeating units constituting the copolymer of cyclopentene and the norbornene compound. By setting the cis/trans ratio of the copolymer within the above range, it is possible to further improve the high fuel efficiency and wear resistance of the rubber composition containing the copolymer.

The copolymer of cyclopentene and the norbornene compound preferably has a glass transition temperature (Tg) of -80°C to 10°C, more preferably -75°C to 0°C, and still more preferably -70°C to -10°C. By setting the glass transition temperature (Tg) of the copolymer within the above range, it is possible to further improve the high fuel efficiency and wear resistance of the rubber composition containing the copolymer. The glass transition temperature of the copolymer can be controlled, for example, by adjusting the type and amount of the norbornene compound used.

The copolymer of cyclopentene and the norbornene compound may have a modified group at the polymer chain end. By having such a terminal modified group, the affinity for silica and the like can be further enhanced, the dispersibility of silica and the like in the rubber composition can be improved, and as a result, the processability (operability), high fuel efficiency, and wear resistance of the rubber composition can be further improved. The modified group introduced at the polymer chain end of the copolymer is not particularly limited, but a modified group containing an atom selected from the group consisting of an atom of Group 15 of the periodic table, an atom of Group 16 of the periodic table, and a silicon atom is preferred. From the viewpoint of further enhancing the affinity for silica and the like, a modified group containing an atom selected from the group consisting of nitrogen atoms, oxygen atoms, phosphorus atoms, sulfur atoms, and silicon atoms is more preferred, and among these, a modified group containing an atom selected from the group consisting of nitrogen atoms, oxygen atoms, and silicon atoms is still more preferred.

Examples of modified groups containing a nitrogen atom include amino groups, pyridyl groups, imino groups, amide groups, nitro groups, urethane bonds, or hydrocarbon groups containing any of these groups. Examples of modified groups containing an oxygen atom include hydroxyl groups, carboxyl groups, ether groups, ester groups, carbonyl groups, aldehyde groups, epoxy groups, or hydrocarbon groups containing any of these groups. Examples of modified groups containing a silicon atom include alkylsilyl groups, oxysilyl groups, or hydrocarbon groups containing any of these groups. Examples of modified groups containing a phosphorus atom include phosphoric acid groups, phosphino groups, or hydrocarbon groups containing any of these groups. Examples of modified groups containing a sulfur atom include sulfonyl groups, thiol groups, thioether groups, or hydrocarbon groups containing any of these groups. The modified group may also be a modified group containing two or more of the above groups. Among these, from the viewpoint of further improving the processability (operability), high fuel efficiency, and wear resistance of the rubber composition, an amino group, pyridyl group, imino group, amide group, hydroxyl group, carboxyl group, aldehyde group, epoxy group, oxysilyl group, or hydrocarbon group containing any of these groups is preferred, and from the viewpoint of affinity for silica and the like, an oxysilyl group is particularly preferred. Here, the oxysilyl group refers to a group having a silicon-oxygen bond.

Examples of the oxysilyl group include alkoxysilyl groups, aryloxysilyl groups, acyloxy groups, alkylsiloxysilyl groups, and arylsiloxysilyl groups. Further, examples include hydroxy silyl groups obtained by hydrolyzing an alkoxysilyl group, aryloxysilyl group, or acyloxy group. Among these, from the viewpoint of affinity for silica, an alkoxysilyl group is preferred. The alkoxysilyl group is a group in which one or more alkoxy groups are bonded to a silicon atom, and specific examples include trimethoxysilyl group, dimethoxymethylsilyl group, methoxydimethylsilyl group, methoxydichlorosilyl group, triethoxysilyl group, diethoxymethylsilyl group, ethoxydimethylsilyl group, dimethoxyethoxysilyl group, methoxydiethoxysilyl group, tripropoxysilyl group, and the like.

The introduction ratio of the modified group at the polymer chain end of the copolymer of cyclopentene and the norbornene compound is not particularly limited, but as a value of the percentage of the number of copolymer chain ends into which the modified group is introduced to the total number of copolymer chain ends, it is preferably 10% or more, more preferably 20% or more, still more preferably 30% or more, and particularly preferably 40% or more. The higher the introduction ratio of the terminal modified group, the higher the affinity for silica and the like, which is preferable. The method for measuring the introduction ratio of the modified group at the polymer chain end is not particularly limited, but as an example in the case of introducing an oxysilyl group as the terminal modified group, it can be determined from the peak area ratio corresponding to the oxysilyl group obtained by ¹H-NMR spectral measurement and the number-average molecular weight (Mn) obtained by gel permeation chromatography (GPC).

The copolymer of cyclopentene and the norbornene compound preferably has a Mooney viscosity (ML₁₊₄, 100°C) of 20 to 150, more preferably 22 to 120, and particularly preferably 25 to 90.

The method for producing the copolymer of cyclopentene and the norbornene compound is not particularly limited, but, for example, a method in which cyclopentene and the norbornene compound represented by the above general formula (1) are copolymerized in the presence of a ring-opening polymerization catalyst can be mentioned.

The ring-opening polymerization catalyst is not particularly limited as long as it can ring-open copolymerize cyclopentene and the norbornene compound represented by the above general formula (1), but a ruthenium carbene complex or a Group 6 transition metal compound of the periodic table containing a halogen atom (hereinafter also referred to as "Group 6 transition metal compound of the periodic table") is preferred. These ring-opening polymerization catalysts may be used alone or in combination of two or more.

Examples of the ruthenium carbene complex include bis(tricyclohexylphosphine)benzylidene ruthenium dichloride, bis(triphenylphosphine)-3,3-diphenylpropenylidene ruthenium dichloride, bis(tricyclohexylphosphine)t-butylvinylidene ruthenium dichloride, dichloro-(3-phenyl-1H-inden-1-ylidene)bis(tricyclohexylphosphine)ruthenium, bis(1,3-diisopropylimidazolin-2-ylidene)benzylidene ruthenium dichloride, bis(1,3-dicyclohexylimidazolin-2-ylidene)benzylidene ruthenium dichloride, (1,3-dimesitylimidazolin-2-ylidene)(tricyclohexylphosphine)benzylidene ruthenium dichloride, (1,3-dimesitylimidazolidin-2-ylidene)(tricyclohexylphosphine)benzylidene ruthenium dichloride, bis(tricyclohexylphosphine)ethoxymethylidene ruthenium dichloride, (1,3-dimesitylimidazolidin-2-ylidene)(tricyclohexylphosphine)ethoxymethylidene ruthenium dichloride, and the like.

The Group 6 transition metal compound of the periodic table is a compound having a Group 6 transition metal atom of the periodic table (long-periodic table, the same applies hereinafter), specifically, a compound having a chromium atom, molybdenum atom, or tungsten atom, and a compound having a molybdenum atom or a tungsten atom is preferred, and in particular, from the viewpoint of high solubility in cyclopentene, a compound having a tungsten atom is more preferred. Specific examples of the Group 6 transition metal compound of the periodic table include molybdenum compounds such as molybdenum pentachloride, molybdenum oxotetrachloride, and molybdenum (phenylimido)tetrachloride; tungsten compounds such as tungsten hexachloride, tungsten oxotetrachloride, tungsten (phenylimido)tetrachloride, monocatacholate tungsten tetrachloride, bis(3,5-di-tert-butyl)catecholate tungsten dichloride, and bis(2-chloroetherate)tetrachloride; and the like.

The amount of the ring-opening polymerization catalyst used is usually in the range of a molar ratio (ring-opening polymerization catalyst:monomer used for copolymerization) of 1:500 to 1:2,000,000, preferably 1:700 to 1:1,500,000, and more preferably 1:1,000 to 1:1,000,000. When the Group 6 transition metal compound of the periodic table is used, the amount of the Group 6 transition metal compound of the periodic table is preferably in the range of a molar ratio (Group 6 transition metal atom in the ring-opening polymerization catalyst:monomer used for ring-opening polymerization) of 1:100 to 1:200,000, more preferably 1:200 to 1:150,000, and still more preferably 1:500 to 1:100,000.

When the Group 6 transition metal compound of the periodic table is used as the ring-opening polymerization catalyst, it is preferable to use it in combination with an organic aluminum compound represented by the following general formula (2). The organic aluminum compound acts as a ring-opening polymerization catalyst together with the above-mentioned Group 6 transition metal compound of the periodic table.

(R⁵)₃₋ₓAl(OR⁶)ₓ ... (2)

In the above general formula (2), R⁵ and R⁶ each independently represent a hydrocarbon group having 1 to 20 carbon atoms, preferably a hydrocarbon group having 1 to 10 carbon atoms. Also, x is 0 < x < 3.

In the above general formula (2), examples of R⁵ and R⁶ include: alkyl groups such as methyl group, ethyl group, isopropyl group, n-propyl group, isobutyl group, n-butyl group, t-butyl group, n-hexyl group, cyclohexyl group, n-octyl group, n-decyl group; aryl groups such as phenyl group, 4-methylphenyl group, 2,6-dimethylphenyl group, 2,6-diisopropylphenyl group, naphthyl group; and the like.

Also, in the above general formula (2), x is 0 < x < 3. That is, in general formula (2), the compositional ratios of R⁵ and OR⁶ can take any value within the respective ranges of 0 < 3-x < 3 and 0 < x < 3, but from the viewpoint of achieving high polymerization activity, x is preferably 0.5 < x < 1.5.

The organic aluminum compound represented by the above general formula (2) can be synthesized, for example, as indicated by the following general formula (3), by reacting trialkyl aluminum with an alcohol.

(R⁵)₃Al + xR⁶OH → (R⁵)₃₋ₓAl(OR⁶)ₓ + (R⁶)ₓH ··· (3)

In the above general formula (2), x can be arbitrarily controlled by defining the reaction ratio of the corresponding trialkyl aluminum and alcohol as indicated in the above general formula (3).

The amount of the organic aluminum compound used varies depending on the type of organic aluminum compound used, but relative to the Group 6 transition metal atom constituting the Group 6 transition metal compound of the periodic table, it is preferably 0.1 to 100 molar equivalents, more preferably 0.2 to 50 molar equivalents, and still more preferably 0.5 to 20 molar equivalents. If the amount of the organic aluminum compound is too small, the polymerization activity may be insufficient, and if it is too large, side reactions tend to occur during ring-opening polymerization.

The polymerization reaction may be carried out in the absence of a solvent or in solution. When copolymerizing in solution, the solvent used is not particularly limited as long as it is inert in the polymerization reaction and can dissolve cyclopentene, the norbornene compound represented by the above general formula (1), the polymerization catalyst, and the like used for copolymerization, but it is preferable to use a hydrocarbon solvent or a halogenated solvent. Examples of the hydrocarbon solvent include aromatic hydrocarbons such as benzene, toluene, xylene, and ethylbenzene; aliphatic hydrocarbons such as hexane, n-heptane, and n-octane; alicyclic hydrocarbons such as cyclohexane, cyclopentane, and methylcyclohexane; and the like. Examples of the halogenated solvent include haloalkanes such as dichloromethane and chloroform; aromatic halogens such as chlorobenzene and dichlorobenzene; and the like. These solvents may be used alone or in combination of two or more.

When copolymerizing cyclopentene and the norbornene compound represented by the above general formula (1), an olefin compound or a diolefin compound may be added to the polymerization reaction system as a molecular weight regulator, as necessary, in order to adjust the molecular weight of the resulting copolymer.

The olefin compound is not particularly limited as long as it is an organic compound having an ethylenically unsaturated bond, and examples include: α-olefins such as 1-butene, 1-pentene, 1-hexene, and 1-octene; styrene compounds such as styrene and vinyltoluene; halogen-containing vinyl compounds such as allyl chloride; alkenyl alcohols such as allyl alcohol and 5-hexenol; silicon-containing vinyl compounds such as allyltrimethoxysilane, allyltriethoxysilane, allyltrichlorosilane, and styryltrimethoxysilane; disubstituted olefins such as 2-butene and 3-hexene; and the like. Examples of the diolefin compound include non-conjugated diolefins such as 1,4-pentadiene, 1,4-hexadiene, 1,5-hexadiene, 1,6-heptadiene, 2-methyl-1,4-pentadiene, and 2,5-dimethyl-1,5-hexadiene.

The amount of the olefin compound and diolefin compound used as the molecular weight regulator may be appropriately selected according to the molecular weight of the copolymer to be produced, but is usually in the range of a molar ratio to the monomer used for copolymerization of 1/100 to 1/100,000, preferably 1/200 to 1/50,000, and more preferably 1/500 to 1/10,000.

Further, in the case where the copolymer of the cyclopentene and the norbornene compound is to have a modified group at the polymer chain end, it is preferable to use, as a molecular weight regulator, a modified group-containing olefinic unsaturated hydrocarbon compound in place of the above-described olefin compound or diolefin compound. By using a modified group-containing olefinic unsaturated hydrocarbon compound, a modified group can be suitably introduced into the polymer chain end of the copolymer obtained by copolymerization. The modified group-containing olefinic unsaturated hydrocarbon compound is not particularly limited as long as it has a modified group and has one olefinic carbon-carbon double bond with metathesis reactivity. For example, when it is desired to introduce an oxysilyl group into the polymer chain end of the copolymer, it suffices to have an oxysilyl group-containing olefinic unsaturated hydrocarbon present in the polymerization reaction system.

Examples of the oxysilyl group-containing olefinic unsaturated hydrocarbons include, as compounds for introducing a modified group into only one end (one terminal) of the polymer chain of the copolymer, alkoxysilane compounds such as vinyltrimethoxysilane, vinyltriethoxysilane, allyltrimethoxysilane, allylmethoxydimethylsilane, allyltriethoxysilane, allylethoxydimethylsilane, styryltrimethoxysilane, styryltriethoxysilane, styrylethyltriethoxysilane, allyltriethoxysilylmethyl ether, and allyltriethoxysilylmethylethylamine; aryloxysilane compounds such as vinyltriphenoxysilane, allyltriphenoxysilane, and allylphenoxydimethylsilane; acyloxysilane compounds such as vinyltriacetoxysilane, allyltriacetoxysilane, allyldiacetoxymethylsilane, and allylacetoxydimethylsilane; alkylsiloxysilane compounds such as allyltris(trimethylsiloxy)silane; arylsiloxysilane compounds such as allyltris(triphenylsiloxy)silane; polysiloxane compounds such as 1-allylheptamethyltrisiloxane, 1-allylnonamethyltetrasiloxane, 1-allylnonamethylcyclopentasiloxane, and 1-allylundecamethylcyclohexasiloxane; and the like. Further, as compounds for introducing a modified group into both ends (both terminals) of the polymer chain of the copolymer, there are alkoxysilane compounds such as bis(trimethoxysilyl)ethylene, bis(triethoxysilyl)ethylene, 2-buten-1,4-di(trimethoxysilane), 2-buten-1,4-di(triethoxysilane), and 1,4-di(trimethoxysilylmethoxy)-2-butene; aryloxysilane compounds such as 2-buten-1,4-di(triphenoxysilane); acyloxysilane compounds such as 2-buten-1,4-di(triacetoxysilane); alkylsiloxysilane compounds such as 2-buten-1,4-di[tris(trimethylsiloxy)silane]; arylsiloxysilane compounds such as 2-buten-1,4-di[tris(triphenylsiloxy)silane]; polysiloxane compounds such as 2-buten-1,4-di(heptamethyltrisiloxane) and 2-buten-1,4-di(undecamethylcyclohexasiloxane); and the like.

The modified group-containing olefinic unsaturated hydrocarbon compound, in addition to its function of introducing a modified group into the polymer chain end of the copolymer, also acts as a molecular weight regulator. Therefore, the amount of the modified group-containing olefinic unsaturated hydrocarbon compound to be used may be appropriately selected according to the molecular weight of the copolymer to be produced, but is usually in the range of a molar ratio of 1/100 to 1/100,000, preferably 1/200 to 1/50,000, more preferably 1/500 to 1/10,000, relative to the monomer used for the copolymerization.

The polymerization reaction temperature is not particularly limited, but is preferably -100°C or higher, more preferably -50°C or higher, still more preferably 0°C or higher, and particularly preferably 20°C or higher. The upper limit of the polymerization reaction temperature is not particularly limited, but is preferably less than 120°C, more preferably less than 100°C, still more preferably less than 90°C, and particularly preferably less than 80°C. The polymerization reaction time is not particularly limited, but is preferably 1 minute to 72 hours, more preferably 10 minutes to 20 hours.

The copolymer obtained by the polymerization reaction may, if desired, have an antioxidant such as a phenol-based stabilizer, a phosphorus-based stabilizer, or a sulfur-based stabilizer added thereto. The amount of the antioxidant to be added may be appropriately determined according to its type and the like. Furthermore, if desired, an extender oil may be blended into the copolymer. When the copolymer is obtained as a polymerization solution, in order to recover the copolymer from the polymerization solution, a known recovery method may be employed. For example, after separating the solvent by steam stripping or the like, the solid may be filtered off and further dried to obtain the copolymer in solid form.

The content of the copolymer of cyclopentene and the norbornene compound is preferably 20 parts by mass to 90 parts by mass, and more preferably 30 parts by mass to 85 parts by mass, per 100 parts by mass of the rubber component. When the content of the copolymer of cyclopentene and the norbornene compound is in the range of 20 parts by mass to 90 parts by mass per 100 parts by mass of the rubber component, the balance among high fuel efficiency, wear resistance, and processability of the rubber composition is further improved.

### - Modified Polymer -

The rubber component includes a polymer that has been modified (modified polymer). Since the modified polymer has high affinity with the filler and can improve the dispersibility of the filler, it is possible to improve the high fuel efficiency, wear resistance, and processability of the rubber composition.

It should be noted that, in the present specification, the above-described copolymer of cyclopentene and the norbornene compound represented by the above general formula (1) is excluded from the "modified polymer" described above. That is, the rubber component of the rubber composition for a tire of the present embodiment includes the above-described copolymer of cyclopentene and the norbornene compound and a modified polymer other than the copolymer.

Examples of the functional group in the modified polymer include, for example, a functional group containing nitrogen, a functional group containing silicon, a functional group containing tin, and a functional group containing oxygen, among which a functional group containing nitrogen is preferred. When the modified polymer has a functional group containing nitrogen, the affinity with the filler is further increased, and the dispersibility of the filler can be further improved, so that the high fuel efficiency, wear resistance, and processability of the rubber composition can be further improved.

The functional group containing a nitrogen atom is preferably selected from the following:
a primary amino group, a primary amino group protected by a hydrolyzable protecting group, an onium salt residual group of a primary amine, an isocyanate group, a thioisocyanate group, an imino group, an imine residual group, an amide group, a secondary amino group protected by a hydrolyzable protecting group, a cyclic secondary amino group, an onium salt residual group of a cyclic secondary amine, a non-cyclic secondary amino group, an onium salt residual group of a non-cyclic secondary amine, an isocyanuric acid triester residual group, a cyclic tertiary amino group, a non-cyclic tertiary amino group, a nitrile group, a pyridyl group, an onium salt residual group of a cyclic tertiary amine, and an onium salt residual group of a non-cyclic tertiary amine; and has a monovalent hydrocarbon group having 1 to 30 carbon atoms including a straight chain, branched chain, alicyclic or aromatic ring, or a monovalent hydrocarbon group having 1 to 30 carbon atoms including a straight chain, branched chain, alicyclic or aromatic ring, which may contain at least one hetero atom selected from oxygen atom, sulfur atom, and phosphorus atom.

As the modified polymer, a polymer obtained by using, as a monomer, a conjugated diene compound, or a conjugated diene compound and an aromatic vinyl compound, and modifying the molecular end and/or main chain of a polymer or copolymer of the conjugated diene compound or a copolymer of the conjugated diene compound and the aromatic vinyl compound with a modifier; or a polymer obtained by using, as a monomer, a conjugated diene compound, or a conjugated diene compound and an aromatic vinyl compound, and polymerizing or copolymerizing these monomers using a polymerization initiator having a modified functional group, can be used.

Regarding the monomer used for synthesizing the modified polymer, examples of the conjugated diene compound include 1,3-butadiene, isoprene, 1,3-pentadiene, 2,3-dimethylbutadiene, 2-phenyl-1,3-butadiene, and 1,3-hexadiene; and examples of the aromatic vinyl compound include styrene, α-methylstyrene, 1-vinylnaphthalene, 3-vinyltoluene, ethylvinylbenzene, divinylbenzene, 4-cyclohexylstyrene, and 2,4,6-trimethylstyrene.

Examples of the modified polymer include modified synthetic isoprene rubber (IR), modified butadiene rubber (BR), modified styrene-butadiene rubber (SBR), and modified styrene-isoprene rubber (SIR), among which modified butadiene rubber (BR) and modified styrene-butadiene rubber (SBR) are preferred, and modified butadiene rubber (BR) is particularly preferred. Modified butadiene rubber (BR) has a low glass transition temperature (Tg), and by combining it with the above-described copolymer of cyclopentene and the norbornene compound, the high fuel efficiency and wear resistance of the rubber composition can be further improved. In addition, modified styrene-butadiene rubber (SBR) has a high glass transition temperature (Tg), is excellent in processability, and also has the effect of suppressing uneven wear of the rubber composition.

As the modifier, a hydrocarbyloxy silane compound is preferred, and as the hydrocarbyloxy silane compound, a compound represented by the following general formula (i) is preferred.

R¹¹ₐ-Si-(OR¹²)₄₋ₐ ··· (i)

In general formula (i), R¹¹ and R¹² each independently represent a monovalent aliphatic hydrocarbon group having 1 to 20 carbon atoms or a monovalent aromatic hydrocarbon group having 6 to 18 carbon atoms, "a" is an integer of 0 to 2, and when there are a plurality of OR¹², each OR¹² may be the same or different, and the molecule does not contain an active proton.

As the hydrocarbyloxy silane compound, an aminoalkoxysilane compound represented by the following general formula (ii) is also preferred.

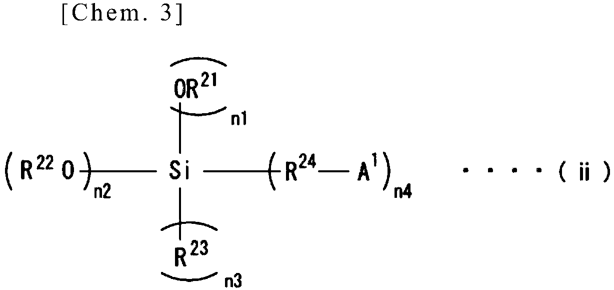

In general formula (ii), n1 + n2 + n3 + n4 = 4 (where n2 is an integer of 1 to 4, and n1, n3, and n4 are integers of 0 to 3).

A¹ is at least one functional group selected from the group consisting of a saturated cyclic tertiary amine compound residual group, an unsaturated cyclic tertiary amine compound residual group, a ketimine residual group, a nitrile group, a (thio)isocyanate group, an isocyanuric acid trihydrocarbyl ester group, a nitrile group, a pyridyl group, a (thio)ketone group, an amide group, and a primary or secondary amino group having a hydrolyzable group. When n4 is 2 or more, A¹ may be the same or different, and A¹ may be a divalent group that forms a cyclic structure by bonding with Si.

R²¹ is a monovalent aliphatic or alicyclic hydrocarbon group having 1 to 20 carbon atoms or a monovalent aromatic hydrocarbon group having 6 to 18 carbon atoms, and when n1 is 2 or more, they may be the same or different.

R²² is a monovalent aliphatic or alicyclic hydrocarbon group having 1 to 20 carbon atoms or a monovalent aromatic hydrocarbon group having 6 to 18 carbon atoms, and may contain a nitrogen atom and/or a silicon atom. When n2 is 2 or more, R²² may be the same or different, or may together form a ring.

R¹³ is a monovalent aliphatic or alicyclic hydrocarbon group having 1 to 20 carbon atoms, a monovalent aromatic hydrocarbon group having 6 to 18 carbon atoms, or a halogen atom, and when n3 is 2 or more, they may be the same or different.

R²⁴ is a divalent aliphatic or alicyclic hydrocarbon group having 1 to 20 carbon atoms or a divalent aromatic hydrocarbon group having 6 to 18 carbon atoms, and when n4 is 2 or more, they may be the same or different.

As the hydrolyzable group in the primary or secondary amino group having a hydrolyzable group, a trimethylsilyl group or a tertbutyldimethylsilyl group is preferred, and a trimethylsilyl group is particularly preferred.

The aminoalkoxysilane compound represented by the above general formula (ii) is preferably an aminoalkoxysilane compound represented by the following general formula (iii).

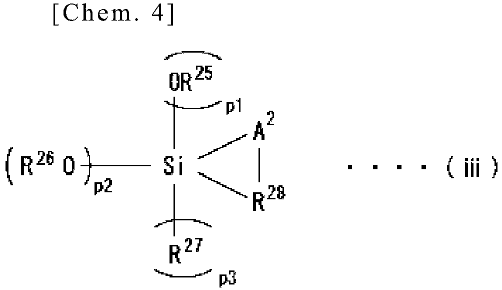

In general formula (iii), p1 + p2 + p3 = 2 (where p2 is an integer of 1 to 2, and p1 and p3 are integers of 0 to 1).

A² is NRa (where Ra is a monovalent hydrocarbon group, a hydrolyzable group, or a nitrogen-containing organic group).

R²⁵ is a monovalent aliphatic or alicyclic hydrocarbon group having 1 to 20 carbon atoms or a monovalent aromatic hydrocarbon group having 6 to 18 carbon atoms.

R²⁶ is a monovalent aliphatic or alicyclic hydrocarbon group having 1 to 20 carbon atoms, a monovalent aromatic hydrocarbon group having 6 to 18 carbon atoms, or a nitrogen-containing organic group, and may contain a nitrogen atom and/or a silicon atom. When p2 is 2, R²⁶ may be the same or different, or may together form a ring.

R²⁷ is a monovalent aliphatic or alicyclic hydrocarbon group having 1 to 20 carbon atoms, a monovalent aromatic hydrocarbon group having 6 to 18 carbon atoms, or a halogen atom.

R²⁸ is a divalent aliphatic or alicyclic hydrocarbon group having 1 to 20 carbon atoms or a divalent aromatic hydrocarbon group having 6 to 18 carbon atoms.

As the hydrolyzable group, a trimethylsilyl group or a tertbutyldimethylsilyl group is preferred, and a trimethylsilyl group is particularly preferred.

The aminoalkoxysilane compound represented by the above general formula (ii) is also preferably an aminoalkoxysilane compound represented by the following general formula (iv) or the following general formula (v).

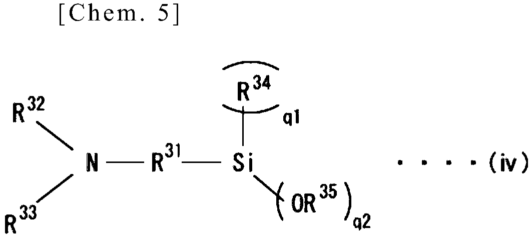

In general formula (iv), q1 + q2 = 3 (where q1 is an integer of 0 to 2, and q2 is an integer of 1 to 3).

R³¹ is a divalent aliphatic or alicyclic hydrocarbon group having 1 to 20 carbon atoms or a divalent aromatic hydrocarbon group having 6 to 18 carbon atoms.

R³² and R³³ each independently represent a hydrolyzable group, a monovalent aliphatic or alicyclic hydrocarbon group having 1 to 20 carbon atoms, or a monovalent aromatic hydrocarbon group having 6 to 18 carbon atoms.

R³⁴ is a monovalent aliphatic or alicyclic hydrocarbon group having 1 to 20 carbon atoms or a monovalent aromatic hydrocarbon group having 6 to 18 carbon atoms, and when q1 is 2, they may be the same or different.

R³⁵ is a monovalent aliphatic or alicyclic hydrocarbon group having 1 to 20 carbon atoms or a monovalent aromatic hydrocarbon group having 6 to 18 carbon atoms, and when q2 is 2 or more, they may be the same or different.

Specific examples of the aminoalkoxysilane compound represented by general formula (iv) include N,N-bis(trimethylsilyl)-3-[diethoxy(methyl)silyl]propylamine (also referred to as "N,N-bis(trimethylsilyl)aminopropylmethyldiethoxysilane").

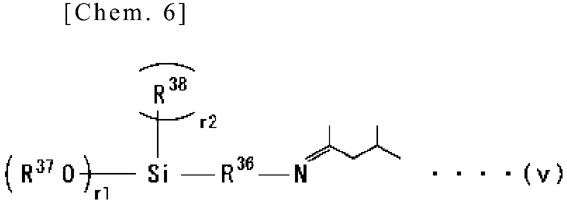

In general formula (v), r1 + r2 = 3 (where r1 is an integer of 1 to 3, and r2 is an integer of 0 to 2).

R³⁶ is a divalent aliphatic or alicyclic hydrocarbon group having 1 to 20 carbon atoms or a divalent aromatic hydrocarbon group having 6 to 18 carbon atoms.

R³⁷ is a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic or alicyclic hydrocarbon group having 1 to 20 carbon atoms, or a monovalent aromatic hydrocarbon group having 6 to 18 carbon atoms, and when r1 is 2 or more, they may be the same or different.

R³⁸ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms, and when r2 is 2, they may be the same or different.

Specific examples of the aminoalkoxysilane compound represented by general formula (v) include N-(1,3-dimethylbutylidene)-3-triethoxysilyl-1-propanamine.

The aminoalkoxysilane compound represented by the above general formula (ii) is also preferably an aminoalkoxysilane compound represented by the following general formula (vi) or the following general formula (vii).

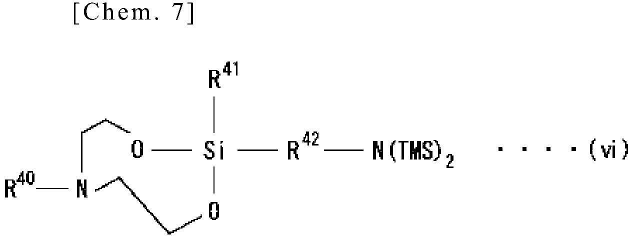

In general formula (vi), R⁴⁰ is a trimethylsilyl group, a monovalent aliphatic or alicyclic hydrocarbon group having 1 to 20 carbon atoms, or a monovalent aromatic hydrocarbon group having 6 to 18 carbon atoms.

R⁴¹ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms.

R⁴² is a divalent aliphatic or alicyclic hydrocarbon group having 1 to 20 carbon atoms or a divalent aromatic hydrocarbon group having 6 to 18 carbon atoms.

Here, TMS denotes a trimethylsilyl group (the same applies hereinafter).

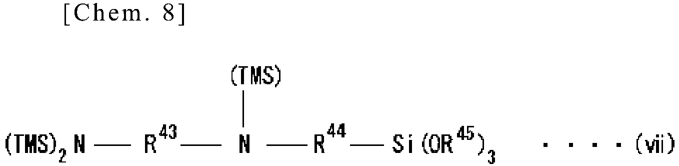

In general formula (vii), R⁴³ and R⁴⁴ each independently represent a divalent aliphatic or alicyclic hydrocarbon group having 1 to 20 carbon atoms or a divalent aromatic hydrocarbon group having 6 to 18 carbon atoms.

R⁴⁵ is a monovalent aliphatic or alicyclic hydrocarbon group having 1 to 20 carbon atoms or a monovalent aromatic hydrocarbon group having 6 to 18 carbon atoms, and each R⁴⁵ may be the same or different.

The aminoalkoxysilane compound represented by the above general formula (ii) is also preferably an aminoalkoxysilane compound represented by the following general formula (viii) or the following general formula (ix).

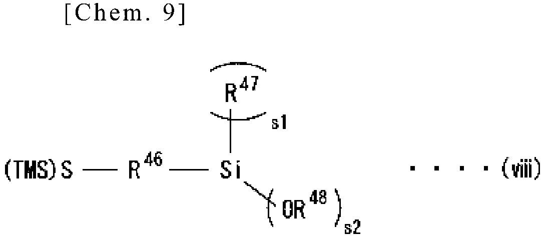

In general formula (viii), s1 + s2 is 3 (where s1 is an integer from 0 to 2, and s2 is an integer from 1 to 3).

R⁴⁶ is a divalent aliphatic or alicyclic hydrocarbon group having 1 to 20 carbon atoms, or a divalent aromatic hydrocarbon group having 6 to 18 carbon atoms.

R⁴⁷ and R⁴⁸ each independently represent a monovalent aliphatic or alicyclic hydrocarbon group having 1 to 20 carbon atoms, or a monovalent aromatic hydrocarbon group having 6 to 18 carbon atoms. A plurality of R⁴⁷ or R⁴⁸ may be the same or different.

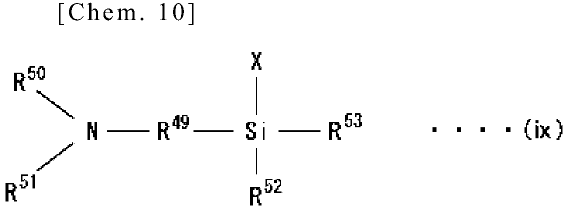

In general formula (ix), X is a halogen atom.

R⁴⁹ is a divalent aliphatic or alicyclic hydrocarbon group having 1 to 20 carbon atoms, or a divalent aromatic hydrocarbon group having 6 to 18 carbon atoms.

R⁵⁰ and R⁵¹ each independently represent a hydrolyzable group, a monovalent aliphatic or alicyclic hydrocarbon group having 1 to 20 carbon atoms, or a monovalent aromatic hydrocarbon group having 6 to 18 carbon atoms, or R⁵⁰ and R⁵¹ may be bonded together to form a divalent organic group.

R⁵² and R⁵³ each independently represent a halogen atom, a hydrocarbyloxy group, a monovalent aliphatic or alicyclic hydrocarbon group having 1 to 20 carbon atoms, or a monovalent aromatic hydrocarbon group having 6 to 18 carbon atoms.

As R⁵⁰ and R⁵¹, hydrolyzable groups are preferred, and as the hydrolyzable group, a trimethylsilyl group or a tertbutyldimethylsilyl group is preferred, with the trimethylsilyl group being particularly preferred.

The aminoalkoxysilane compound represented by the above general formula (ii) is also preferably an aminoalkoxysilane compound represented by the following general formula (x), the following general formula (xi), the following general formula (xii), or the following general formula (xiii).

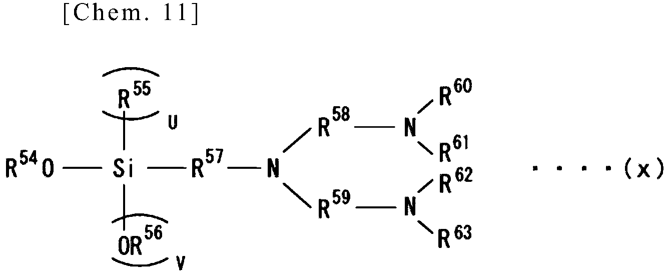

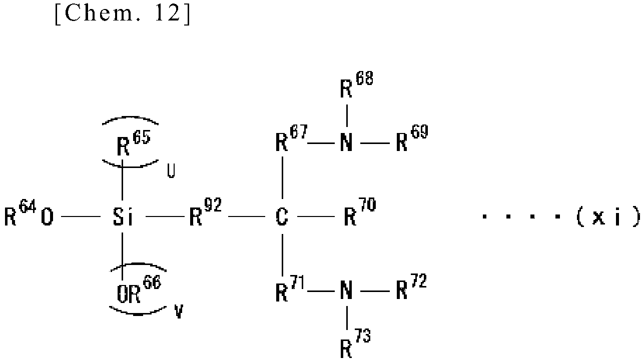

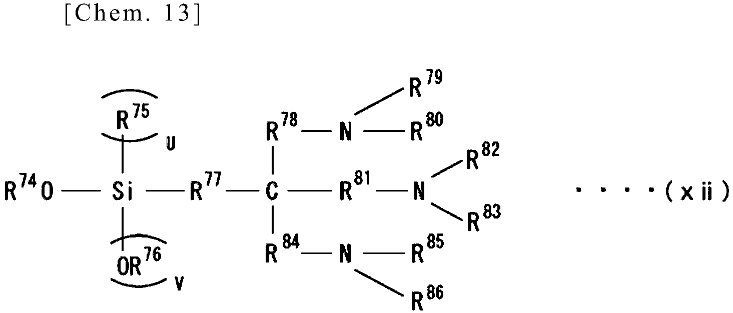

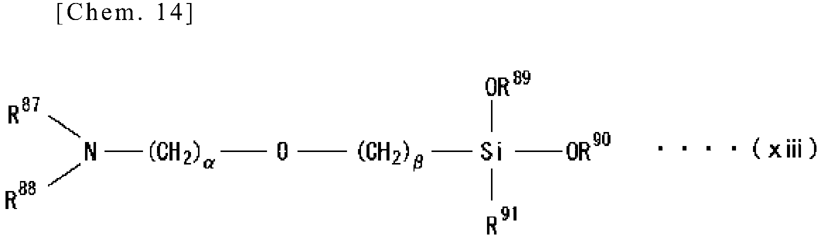

In general formulas (x) to (xiii), the symbols U and V are each integers from 0 to 2 satisfying U + V = 2.

R⁵⁴ to R⁹² in general formulas (x) to (xiii) may be the same or different, and represent a monovalent or divalent aliphatic or alicyclic hydrocarbon group having 1 to 20 carbon atoms, or a monovalent or divalent aromatic hydrocarbon group having 6 to 18 carbon atoms.

In general formula (xiii), α and β are integers from 0 to 5.

Among the compounds satisfying general formulas (x), (xi), and (xii), particularly preferred are N1,N1,N7,N7-tetramethyl-4-((trimethoxysilyl)methyl)heptane-1,7-diamine; 2-((hexyl-dimethoxysilyl)methyl)-N1,N1,N3,N3-2-pentamethylpropane-1,3-diamine; N1-(3-(dimethylamino)propyl)-N3,N3-dimethyl-N1-(3-(trimethoxysilyl)propyl)propane-1,3-diamine; and 4-(3-(dimethylamino)propyl)-N1,N1,N7,N7-tetramethyl-4-((trimethoxysilyl)methyl)heptane-1,7-diamine.

Among the compounds satisfying general formula (xiii), particularly preferred are N,N-dimethyl-2-(3-(dimethoxymethylsilyl)propoxy)ethanamine; N,N-bis(trimethylsilyl)-2-(3-(trimethoxysilyl)propoxy)ethanamine; N,N-dimethyl-2-(3-(trimethoxysilyl)propoxy)ethanamine; and N,N-dimethyl-3-(3-(trimethoxysilyl)propoxy)propan-1-amine.

As the above hydrocarbyloxy silane compound, a compound represented by the following general formula (xiv) is also preferred.

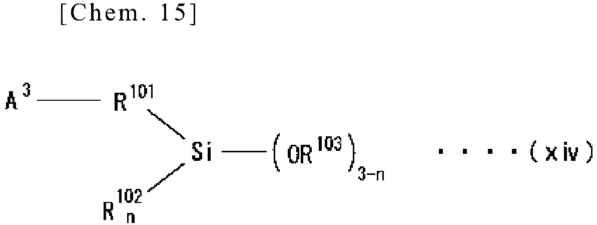

In the above general formula (xiv), A³ is a monovalent group having at least one functional group selected from (thio)epoxy, (thio)isocyanate, (thio)ketone, (thio)aldehyde, imine, amide, isocyanuric acid trihydrocarbyl ester, (thio)carboxylic acid ester, (thio)carboxylic acid metal salt, carboxylic acid anhydride, carboxylic acid halide, and carbonic acid dihydrocarbyl ester. Here, "(thio)epoxy" refers to epoxy and thioepoxy, "(thio)isocyanate" refers to isocyanate and thioisocyanate, "(thio)ketone" refers to ketone and thioketone, "(thio)aldehyde" refers to aldehyde and thioaldehyde, "(thio)carboxylic acid ester" refers to carboxylic acid ester and thiocarboxylic acid ester, and "(thio)carboxylic acid metal salt" refers to carboxylic acid metal salt and thiocarboxylic acid metal salt.

R¹⁰¹ is a single bond or a divalent inert hydrocarbon group, and the divalent inert hydrocarbon group preferably has 1 to 20 carbon atoms.

R¹⁰² and R¹⁰³ each independently represent a monovalent aliphatic hydrocarbon group having 1 to 20 carbon atoms or a monovalent aromatic hydrocarbon group having 6 to 18 carbon atoms, n is an integer from 0 to 2, and when there are multiple R¹⁰², the plurality of R¹⁰² may be the same or different, and when there are multiple OR¹⁰³, the plurality of OR¹⁰³ may be the same or different.

Further, the hydrocarbyloxy silane compound represented by general formula (xiv) does not contain an active proton or onium salt in its molecule.

Among the functional groups in A³ in general formula (xiv), imine includes ketimine, aldimine, and amidine, and (thio)carboxylic acid ester includes unsaturated carboxylic acid esters such as acrylate and methacrylate. As the metal in the (thio)carboxylic acid metal salt, alkali metals, alkaline earth metals, Al, Sn, Zn, and the like can be mentioned.

As the divalent inert hydrocarbon group among R¹⁰¹, an alkylene group having 1 to 20 carbon atoms is preferred. The alkylene group may be linear, branched, or cyclic, but a linear one is particularly preferred. Examples of such linear alkylene groups include methylene, ethylene, trimethylene, tetramethylene, pentamethylene, hexamethylene, octamethylene, decamethylene, dodecamethylene, and the like.

As R¹⁰² and R¹⁰³, examples include alkyl groups having 1 to 20 carbon atoms, alkenyl groups having 2 to 18 carbon atoms, aryl groups having 6 to 18 carbon atoms, and aralkyl groups having 7 to 18 carbon atoms. Here, the above alkyl and alkenyl groups may be linear, branched, or cyclic, and examples thereof include methyl, ethyl, n-propyl, isopropyl, n-butyl, isobutyl, sec-butyl, tert-butyl, pentyl, hexyl, octyl, decyl, dodecyl, cyclopentyl, cyclohexyl, vinyl, propenyl, allyl, hexenyl, octenyl, cyclopentenyl, cyclohexenyl groups, and the like. The aryl group may have a substituent such as a lower alkyl group on the aromatic ring, and examples thereof include phenyl, tolyl, xylyl, naphthyl groups, and the like. Furthermore, the aralkyl group may have a substituent such as a lower alkyl group on the aromatic ring, and examples thereof include benzyl, phenethyl, naphthylmethyl groups, and the like.

n is an integer from 0 to 2, but 0 is preferred, and it is necessary that the molecule does not have an active proton or onium salt.

As the hydrocarbyloxy silane compound represented by the above general formula (xiv), for example, as (thio)epoxy group-containing hydrocarbyloxy silane compounds, 2-glycidoxyethyltrimethoxysilane, 2-glycidoxyethyltriethoxysilane, (2-glycidoxyethyl)methyldimethoxysilane, 3-glycidoxypropyltrimethoxysilane (hereinafter also referred to as "GPMOS"), 3-glycidoxypropyltriethoxysilane, (3-glycidoxypropyl)methyldimethoxysilane, 2-(3,4-epoxycyclohexyl)ethyltrimethoxysilane, 2-(3,4-epoxycyclohexyl)ethyltriethoxysilane, 2-(3,4-epoxycyclohexyl)ethyl(methyl)dimethoxysilane, 2-(3,4-epoxycyclohexyl)trimethoxysilane, and those in which the epoxy group in these compounds is replaced with a thioepoxy group are preferred, and among these, 3-glycidoxypropyltrimethoxysilane and 2-(3,4-epoxycyclohexyl)trimethoxysilane are particularly preferred.

As imine group-containing hydrocarbyloxy silane compounds, N-(1,3-dimethylbutylidene)-3-(triethoxysilyl)-1-propanamine, N-(1-methylethylidene)-3-(triethoxysilyl)-1-propanamine, N-ethylidene-3-(triethoxysilyl)-1-propanamine, N-(1-methylpropylidene)-3-(triethoxysilyl)-1-propanamine, N-(4-N,N-dimethylaminobenzylidene)-3-(triethoxysilyl)-1-propanamine, N-(cyclohexylidene)-3-(triethoxysilyl)-1-propanamine, and the corresponding trimethoxysilyl compounds, methyldiethoxysilyl compounds, ethyldiethoxysilyl compounds, methyldimethoxysilyl compounds, ethyldimethoxysilyl compounds, and the like are preferred, and among these, N-(1-methylpropylidene)-3-(triethoxysilyl)-1-propanamine and N-(1,3-dimethylbutylidene)-3-(triethoxysilyl)-1-propanamine are particularly preferred.

As the above modifier, a coupling agent represented by the following general formula (xv) is also preferred.

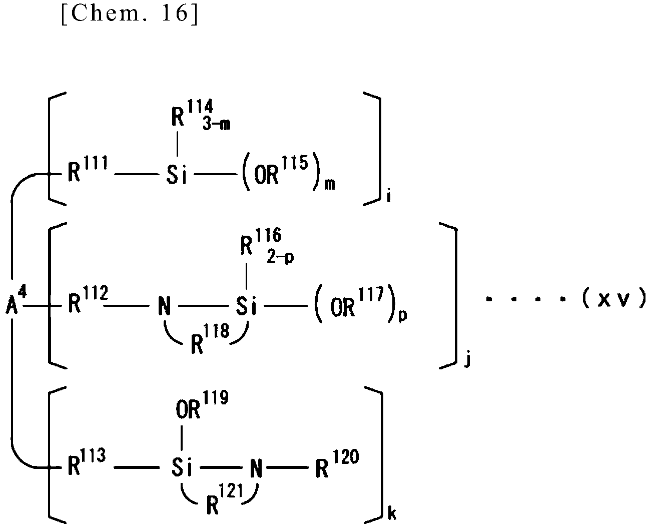

In the above general formula (xv), R¹¹¹, R¹¹², and R¹¹³ each independently represent a single bond or an alkylene group having 1 to 20 carbon atoms.

R¹¹⁴, R¹¹⁵, R¹¹⁶, R¹¹⁷, and R¹¹⁹ each independently represent an alkyl group having 1 to 20 carbon atoms.

R¹¹⁸ and R¹²¹ each independently represent an alkylene group having 1 to 20 carbon atoms.

R¹²⁰ represents an alkyl group or a trialkylsilyl group having 1 to 20 carbon atoms.

m is an integer from 1 to 3, and p is 1 or 2.

When there are multiple R¹¹¹ to R¹²¹, m, and p, each is independent, and i, j, and k each independently represent an integer from 0 to 6, provided that (i + j + k) is an integer from 3 to 10.

A⁴ represents a hydrocarbon group having 1 to 20 carbon atoms or an organic group having 1 to 20 carbon atoms, having at least one atom selected from the group consisting of an oxygen atom, nitrogen atom, silicon atom, sulfur atom, and phosphorus atom, and not having an active hydrogen.

Here, the hydrocarbon group indicated by A⁴ in the above general formula (xv) includes saturated, unsaturated, aliphatic, and aromatic hydrocarbon groups. As the organic group not having an active hydrogen, for example, an organic group not having a functional group with active hydrogen such as a hydroxyl group (-OH), secondary amino group (>NH), primary amino group (-NH₂), or sulfhydryl group (-SH) can be mentioned.

The coupling agent represented by general formula (xv) is preferably at least one selected from the group consisting of tetrakis[3-(2,2-dimethoxy-1-aza-2-silacyclopentane)propyl]-1,3-propanediamine, tetrakis(3-trimethoxysilylpropyl)-1,3-propanediamine, and tetrakis(3-trimethoxysilylpropyl)-1,3-bisaminomethylcyclohexane.

As the above modifier, a coupling agent represented by the following general formula (xvi) is also preferred.

(R¹²⁶)_{b}ZX_{c} ··· (xvi)

In the above general formula (xvi), Z is tin or silicon, and X is chlorine or bromine.

R¹²⁶ is selected from the group consisting of an alkyl group having 1 to 20 carbon atoms, a cycloalkyl group having 3 to 20 carbon atoms, an aryl group having 6 to 20 carbon atoms, and an aralkyl group having 7 to 20 carbon atoms. Here, specific examples of R¹²⁶ include methyl, ethyl, n-butyl, neophyl, cyclohexyl, n-octyl, 2-ethylhexyl groups, and the like.

b is 0 to 3, and c is 1 to 4, provided that b + c = 4.

As the coupling agent represented by the above general formula (xvi), tin tetrachloride, (R¹²⁶)SnCl₃, (R¹²⁶)₂SnCl₂, (R¹²⁶)₃SnCl, silicon tetrachloride, and the like are preferred, and among these, tin tetrachloride is particularly preferred.

As the polymerization initiator having the above-mentioned modifying functional group, a lithium amide compound is preferred. Examples of such lithium amide compounds include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutylamide, lithium ethylbenzylamide, lithium methylphenethylamide, and the like.

Further, as the above lithium amide compound, a lithium amide compound represented by the formula: Li-AM [wherein AM is a substituted amino group represented by the following formula (xvii): 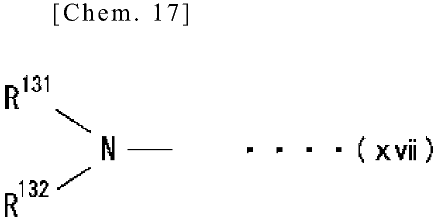 (wherein R¹³¹ and R¹³² each independently represent an alkyl group, cycloalkyl group, or aralkyl group having 1 to 12 carbon atoms), or a cyclic amino group represented by the following formula (xviii): 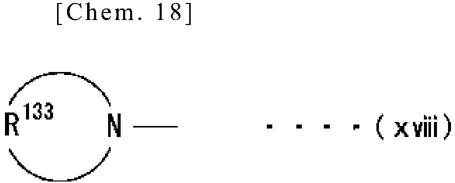 (wherein R¹³³ represents an alkylene group, substituted alkylene group, oxyalkylene group, or N-alkylamino-alkylene group having 3 to 16 methylene groups)] can be used, and by using a lithium amide compound represented by the above, a modified polymer can be obtained in which at least one nitrogen-containing functional group selected from the group consisting of a substituted amino group represented by formula (xvii) and a cyclic amino group represented by formula (xviii) is introduced.

In the above formula (xvii), R¹³¹ and R¹³² are an alkyl group, cycloalkyl group, or aralkyl group having 1 to 12 carbon atoms, and specific examples include methyl, ethyl, butyl, octyl, cyclohexyl, 3-phenyl-1-propyl, and isobutyl groups, and the like. Note that R¹³¹ and R¹³² may be the same or different.

In the above formula (xviii), R¹³³ is an alkylene group, substituted alkylene group, oxyalkylene group, or N-alkylamino-alkylene group having 3 to 16 methylene groups. Here, the substituted alkylene group includes mono- to octa-substituted alkylene groups, and as the substituent, a linear or branched alkyl group having 1 to 12 carbon atoms, a cycloalkyl group, a bicycloalkyl group, an aryl group, or an aralkyl group can be mentioned. Specific examples of R¹³³ include trimethylene, tetramethylene, hexamethylene, oxy-diethylene, N-alkylazadiethylene, dodecamethylene, and hexadecamethylene groups, and the like.

The above lithium amide compound may be preliminarily prepared from a secondary amine and a lithium compound and used in the polymerization reaction, or may be generated in the polymerization system.

As the above secondary amine, in addition to dimethylamine, diethylamine, dibutylamine, dioctylamine, dicyclohexylamine, and diisobutylamine, cyclic amines such as azacycloheptane (also called "hexamethyleneimine (HMI)"), 2-(2-ethylhexyl)pyrrolidine, 3-(2-propyl)pyrrolidine, 3,5-bis(2-ethylhexyl)piperidine, 4-phenylpiperidine, 7-decyl-1-azacyclotridecane, 3,3-dimethyl-1-azacyclotetradecane, 4-dodecyl-1-azacyclooctane, 4-(2-phenylbutyl)-1-azacyclooctane, 3-ethyl-5-cyclohexyl-1-azacycloheptane, 4-hexyl-1-azacycloheptane, 9-isoamyl-1-azacycloheptadecane, 2-methyl-1-azacycloheptadec-9-ene, 3-isobutyl-1-azacyclododecane, 2-methyl-7-tert-butyl-1-azacyclododecane, 5-nonyl-1-azacyclododecane, 8-(4'-methylphenyl)-5-pentyl-3-azabicyclo[5.4.0]undecane, 1-butyl-6-azabicyclo[3.2.1]octane, 8-ethyl-3-azabicyclo[3.2.1]octane, 1-propyl-3-azabicyclo[3.2.2]nonane, 3-(tert-butyl)-7-azabicyclo[4.3.0]nonane, 1,5,5-trimethyl-3-azabicyclo[4.4.0]decane, and the like can be mentioned.

As the above lithium compound, hydrocarbyl lithium such as ethyllithium, n-propyllithium, isopropyllithium, n-butyllithium, sec-butyllithium, tert-octyllithium, n-decyllithium, phenyllithium, 2-naphthyllithium, 2-butyl-phenyllithium, 4-phenyl-butyllithium, cyclohexyllithium, cyclopentyllithium, and the reaction product of diisopropenylbenzene and butyllithium can be used.

In the production of the above modified polymer, anionic polymerization using the above-mentioned polymerization initiator having a modifying functional group or the above lithium compound (i.e., a polymerization initiator not having a modifying functional group) may be used, but the polymerization reaction mechanism is not limited thereto, and for example, coordination polymerization may also be used.

Here, when producing a modified polymer by coordination polymerization, it is preferable to use a rare earth metal compound as the polymerization initiator, and it is further preferable to use a combination of the following components (a), (b), and (c).

The component (a) used in the coordination polymerization is selected from rare earth metal compounds and complexes of rare earth metal compounds with Lewis bases, among others. Here, examples of rare earth metal compounds include carboxylates, alkoxides, β-diketone complexes, phosphates, and phosphonates of rare earth elements, and examples of Lewis bases include acetylacetone, tetrahydrofuran, pyridine, N,N-dimethylformamide, thiophene, diphenyl ether, triethylamine, organic phosphorus compounds, and monovalent or divalent alcohols. As the rare earth element in the above rare earth metal compound, lanthanum, neodymium, praseodymium, samarium, and gadolinium are preferred, and among these, neodymium is particularly preferred.

Furthermore, as specific examples of the component (a), mention may be made of neodymium versatate, neodymium tri-2-ethylhexanoate and its complex with acetylacetone, neodymium trineodecanoate and its complex with acetylacetone, and neodymium tri-n-butoxide.

The component (b) used in the coordination polymerization is selected from organic aluminum compounds. Specific examples of such organic aluminum compounds include trihydrocarbyl aluminum compounds, hydrocarbyl aluminum hydrides, and hydrocarbyl aluminoxane compounds having a hydrocarbon group with 1 to 30 carbon atoms. Specific examples of such organic aluminum compounds include trialkyl aluminum, dialkyl aluminum hydride, alkyl aluminum dihydride, and alkyl aluminoxane. It is preferable to use aluminoxane in combination with another organic aluminum compound as the component (b).

The component (c) used in the coordination polymerization is selected from compounds having hydrolyzable halogen or their complexes with Lewis bases; organic halides having a tertiary alkyl halide, benzyl halide, or allyl halide; and ionic compounds composed of a non-coordinating anion and a counter cation, among others. Specific examples of such component (c) include alkyl aluminum dichloride, dialkyl aluminum chloride, silicon tetrachloride, tin tetrachloride, complexes of zinc chloride with a Lewis base such as alcohol, complexes of magnesium chloride with a Lewis base such as alcohol, benzyl chloride, t-butyl chloride, benzyl bromide, t-butyl bromide, and triphenylcarbonium tetrakis(pentafluorophenyl)borate.

The modified polymer may, after reaction with a modifier such as a hydrocarbyloxy silane compound, be further reacted with at least one selected from the group consisting of a condensation accelerator containing a metal element, an inorganic acid, and a metal halide. By reacting with at least one selected from the group consisting of a condensation accelerator containing a metal element, an inorganic acid, and a metal halide, it is possible to produce a modified polymer having a high Mooney viscosity and excellent shape stability.

As the condensation accelerator containing a metal element, it is preferable to use a metal compound containing at least one metal selected from metals belonging to Groups 2 to 15 of the Periodic Table. Specific examples of the metal element include titanium, zirconium, aluminum, bismuth, and tin. As the condensation accelerator containing a metal element, alkoxides, carboxylates, or acetylacetonate complexes of the above metals are preferred. Specific examples of the condensation accelerator include tetrakis(2-ethyl-1,3-hexanediolato)titanium, tetrakis(2-ethylhexyloxy)titanium (hereinafter also referred to as "tetra-2-ethylhexyl titanate" or "EHOTi"), tetra(octanediolato)titanium, tris(2-ethylhexanoate)bismuth, tetra-n-propoxyzirconium, tetra-n-butoxyzirconium, bis(2-ethylhexanoate)zirconium oxide, bis(oleate)zirconium oxide, triisopropoxyaluminum, trisec-butoxyaluminum, tris(2-ethylhexanoate)aluminum, tris(stearate)aluminum, zirconium tetrakis(acetylacetonate), aluminum tris(acetylacetonate), bis(2-ethylhexanoate)tin, and di-n-octyltin bis(2-ethylhexyl maleate).

On the other hand, examples of the inorganic acid include hydrochloric acid, sulfuric acid, and phosphoric acid.

As the metal halide, it is preferable to suitably use a metal halide containing at least one metal selected from metals belonging to Groups 2 to 15 of the Periodic Table, and more preferably, a halide containing at least one metal atom selected from the group consisting of silicon, tin, aluminum, zinc, titanium, and zirconium. Specific examples of the metal halide include trimethylsilyl chloride, dimethyldichlorosilane, methyltrichlorosilane, silicon tetrachloride, methyldichlorosilane, tin tetrachloride, diethyl aluminum chloride, ethyl aluminum sesquichloride, ethyl aluminum dichloride, zinc chloride, titanium tetrachloride, titanocene dichloride, zirconium tetrachloride, and zirconocene dichloride.

The reaction with the inorganic acid or metal halide is preferably carried out in the presence of water. The water may be used by itself, as a solution such as an alcohol solution, or as dispersed micelles in a hydrocarbon solvent.

The modified polymer may, after reaction with a modifier such as a hydrocarbyloxy silane compound, be stabilized by reaction with a carboxylic partial ester of a polyhydric alcohol.

Here, the carboxylic partial ester of a polyhydric alcohol refers to an ester of a polyhydric alcohol and a carboxylic acid, and means a partial ester having at least one hydroxyl group. Specifically, esters of saccharides or modified saccharides having four or more carbon atoms and fatty acids are preferably used. More preferably, the ester is (1) a fatty acid partial ester of a polyhydric alcohol, particularly a partial ester (which may be a monoester, diester, or triester) of a saturated or unsaturated higher fatty acid having 10 to 20 carbon atoms and a polyhydric alcohol, or (2) an ester compound in which a partial ester of a polycarboxylic acid and a higher alcohol is bonded to a polyhydric alcohol in 1 to 3 units.

As the polyhydric alcohol used as a raw material for the partial ester, preferably, a saccharide having 5 or 6 carbon atoms and at least three hydroxyl groups (which may or may not be hydrogenated), glycol, or a polyhydroxy compound is used. As the raw material fatty acid, preferably, a saturated or unsaturated fatty acid having 10 to 20 carbon atoms is used, and examples include stearic acid, lauric acid, and palmitic acid.

Among the fatty acid partial esters of polyhydric alcohols, sorbitan fatty acid esters are preferred, and specific examples include sorbitan monolaurate, sorbitan monopalmitate, sorbitan monostearate, sorbitan tristearate, sorbitan monooleate, and sorbitan trioleate.

The content of the modified polymer is preferably 5 parts by mass to 90 parts by mass, more preferably 10 parts by mass to 80 parts by mass, and still more preferably 15 parts by mass to 70 parts by mass per 100 parts by mass of the rubber component. When the content of the modified polymer is 5 parts by mass to 90 parts by mass per 100 parts by mass of the rubber component, the balance among high fuel efficiency, wear resistance, and processability of the rubber composition is further improved.

### - Other Rubbers -

The rubber component may further include other rubbers. Examples of such other rubbers include, in addition to natural rubber (NR), unmodified synthetic isoprene rubber (IR), butadiene rubber (BR), styrene-butadiene rubber (SBR), chloroprene rubber (CR), butyl rubber (IIR), halogenated butyl rubber, ethylene-propylene rubber (EPR, EPDM), fluororubber, silicone rubber, and urethane rubber. The content of these other rubbers is preferably 30 parts by mass or less, more preferably 20 parts by mass or less, and still more preferably 10 parts by mass or less per 100 parts by mass of the rubber component.

### (Filler)

The rubber composition for a tire of the present embodiment contains a filler. By including a filler, the reinforcing property of the rubber composition is improved. Examples of such fillers include carbon black, silica, clay, talc, calcium carbonate, and aluminum hydroxide, among which carbon black is preferred.

The content of the filler is preferably in the range of 5 parts by mass to 80 parts by mass per 100 parts by mass of the rubber component. When the content of the filler is 5 parts by mass or more per 100 parts by mass of the rubber component, the wear resistance of the rubber composition is further improved, and when it is 80 parts by mass or less, the high fuel efficiency and processability of the rubber composition are further improved. From the viewpoint of wear resistance, the content of the filler is more preferably 10 parts by mass or more, still more preferably 20 parts by mass or more per 100 parts by mass of the rubber component, and from the viewpoint of high fuel efficiency and processability, more preferably 70 parts by mass or less, and still more preferably 60 parts by mass or less.

### - Carbon Black -

It is preferable that the filler includes carbon black. Since carbon black has a significant effect of reinforcing the rubber composition and improving its wear resistance, a rubber composition for a tire containing carbon black as a filler has further improved wear resistance.

The content of the carbon black is preferably in the range of 5 parts by mass to 80 parts by mass per 100 parts by mass of the rubber component. When the content of carbon black is 5 parts by mass or more per 100 parts by mass of the rubber component, the wear resistance of the rubber composition is further improved, and when it is 80 parts by mass or less, the high fuel efficiency and processability of the rubber composition are further improved. From the viewpoint of wear resistance, the content of carbon black is more preferably 10 parts by mass or more, still more preferably 20 parts by mass or more per 100 parts by mass of the rubber component, and from the viewpoint of high fuel efficiency and processability, more preferably 70 parts by mass or less, and still more preferably 60 parts by mass or less.

The proportion of carbon black in the filler is preferably 70% by mass or more, more preferably 80% by mass or more, still more preferably 90% by mass or more, and may be 100% by mass, from the viewpoint of wear resistance of the rubber composition.

### (Others)

The rubber composition for a tire of the present embodiment may, in addition to the above-described rubber component and filler, optionally contain various components commonly used in the rubber industry, such as a silane coupling agent, antioxidant, hydrogenated fatty acid, zinc oxide (zinc white), tackifier, vulcanization accelerator, and vulcanizing agent, as appropriate, within a range that does not impair the object of the present invention. Commercially available products can be suitably used as these compounding agents.

Examples of the antioxidant include N-(1,3-dimethylbutyl)-N'-phenyl-p-phenylenediamine (6C), 2,2,4-trimethyl-1,2-dihydroquinoline polymer (TMDQ), and the like. These antioxidants may be used alone or in combination of two or more. The content of the antioxidant is not particularly limited, but is preferably in the range of 0.1 part by mass to 5 parts by mass, more preferably 1 part by mass to 4 parts by mass per 100 parts by mass of the rubber component.

Examples of the hydrogenated fatty acid include stearic acid. The content of the hydrogenated fatty acid is not particularly limited, but is preferably in the range of 0.1 part by mass to 5 parts by mass, more preferably 1 part by mass to 4 parts by mass per 100 parts by mass of the rubber component.

The content of zinc oxide (zinc white) is not particularly limited, but is preferably in the range of 0.1 part by mass to 10 parts by mass, more preferably 1 part by mass to 8 parts by mass per 100 parts by mass of the rubber component.

Examples of the tackifier include rosin-based resin, terpene-based resin, petroleum-based resin, phenol-based resin, coal-based resin, and xylene-based resin, among which petroleum-based resin is preferred. Examples of such petroleum-based resins include C₅-based resin, C₅/C₉-based resin, C₉-based resin, and dicyclopentadiene resin. The content of the tackifier is not particularly limited, but is preferably in the range of 0.1 part by mass to 5 parts by mass, more preferably 0.5 part by mass to 3 parts by mass per 100 parts by mass of the rubber component.

Examples of the vulcanization accelerator include sulfenamide vulcanization accelerator, guanidine vulcanization accelerator, thiazole vulcanization accelerator, thiuram vulcanization accelerator, and dithiocarbamate vulcanization accelerator. These vulcanization accelerators may be used alone or in combination of two or more. The content of the vulcanization accelerator is not particularly limited, but is preferably in the range of 0.1 part by mass to 5 parts by mass, more preferably 0.2 part by mass to 4 parts by mass per 100 parts by mass of the rubber component.

Examples of the vulcanizing agent include sulfur. The content of the vulcanizing agent is preferably in the range of 0.1 part by mass to 6 parts by mass as sulfur per 100 parts by mass of the rubber component, and more preferably in the range of 0.5 part by mass to 3 parts by mass.

### (Method for Producing Rubber Composition for Tire)

The method for producing the rubber composition for a tire is not particularly limited, but for example, it can be produced by compounding the above-described rubber component and filler with various components appropriately selected as needed, followed by kneading, warming, extrusion, and the like. Further, by vulcanizing the obtained rubber composition, a vulcanized rubber can be obtained.

The kneading conditions are not particularly limited, and various conditions such as the input volume of the kneading apparatus, the rotational velocity of the rotor, ram pressure, kneading temperature, kneading time, and type of kneading apparatus can be appropriately selected according to the purpose. As the kneading apparatus, a Banbury mixer, Intermix, kneader, roll, or the like, which is usually used for kneading rubber compositions, can be used.

The conditions for warming are also not particularly limited, and various conditions such as warming temperature, warming time, and warming apparatus can be appropriately selected according to the purpose. As the warming apparatus, a warming roll machine or the like, which is usually used for warming rubber compositions, can be used.

The conditions for extrusion are also not particularly limited, and various conditions such as extrusion time, extrusion speed, extrusion apparatus, and extrusion temperature can be appropriately selected according to the purpose. As the extrusion apparatus, an extruder or the like, which is usually used for extruding rubber compositions, can be used. The extrusion temperature can be determined as appropriate.

The apparatus, method, and conditions for vulcanization are not particularly limited, and can be appropriately selected according to the purpose. As the apparatus for vulcanization, a molding vulcanizer using a mold or the like, which is usually used for vulcanizing rubber compositions, can be used. As for the vulcanization conditions, the temperature is, for example, about 100°C to 190°C.

### <Tire>

The tire of the present embodiment is characterized by including the above-described rubber composition for a tire. Since the tire of the present embodiment includes the above-described rubber composition for a tire, a good balance among high fuel efficiency, wear resistance, and productivity is achieved. As the application site of the rubber composition in the tire, tread rubber may be mentioned.

The tire of the present embodiment may be obtained by molding using an unvulcanized rubber composition and then vulcanizing according to the type of tire to be applied, or by molding using a semi-vulcanized rubber that has undergone a preliminary vulcanization step and then further subjecting it to main vulcanization. The tire of the present embodiment is preferably a pneumatic tire, and as the gas to be filled in the pneumatic tire, in addition to ordinary or oxygen partial pressure-adjusted air, an inert gas such as nitrogen, argon, or helium can be used.

### EXAMPLES

Hereinafter, the present invention will be described in more detail with reference to examples, but the present invention is not limited to the following examples in any way.

### <Synthesis Method of Modified BR1>

In a pressure-resistant glass vessel of about 900 mL that had been dried and purged with nitrogen, 283 g of cyclohexane, 50 g of 1,3-butadiene, 0.0057 mmol of 2,2-di-tetrahydrofurylpropane, and 0.513 mmol of hexamethyleneimine (HMI) were added, and then 0.57 mmol of n-butyllithium (BuLi) was added. After that, polymerization was carried out for 4.5 hours in a 50°C water bath equipped with a stirring device. The polymerization conversion rate at this time was almost 100%. Next, 0.100 mmol of tin tetrachloride was promptly added to this polymerization reaction system as a modifier (coupling agent), and the mixture was further stirred at 50°C for 30 minutes to carry out the modification reaction. Thereafter, 0.5 mL of an isopropanol solution of 2,6-di-t-butyl-p-cresol (BHT) (BHT concentration: 5% by mass) was added to the polymerization reaction system to terminate the reaction, and the product was further dried according to a conventional method to obtain a tin atom-containing modified butadiene rubber (HMI-BR-Sn: modified BR1). The obtained modified butadiene rubber (modified BR1) was analyzed for the vinyl bond content in the butadiene portion by the integration ratio of the ¹H-NMR spectrum, which was found to be 14%. The glass transition temperature (Tg) was determined from the inflection point of the DSC curve and was -95°C. The coupling ratio was determined from the ratio of the peak area on the highest molecular weight side to the total area of the molecular weight distribution curve by gel permeation chromatography (GPC), and was 65%.

### <Synthesis Method of Modified BR2>

In a 5 L autoclave purged with nitrogen, 2.4 kg of cyclohexane and 300 g of 1,3-butadiene were charged under a nitrogen atmosphere. To these, a catalyst previously prepared by reacting, at 50°C for 30 minutes, a cyclohexane solution of versatic acid neodymium (0.09 mmol) as a catalyst component, a toluene solution of methylaluminoxane (MAO) (1.8 mmol), a toluene solution of diisobutyl aluminum hydride (DIBAH) (5.0 mmol), a toluene solution of diethyl aluminum chloride (0.18 mmol), and 1,3-butadiene (4.5 mmol), was added, and polymerization was conducted at 80°C for 60 minutes. The conversion rate of 1,3-butadiene was nearly 100%. 200 g of this polymer solution was withdrawn, a methanol solution containing 1.5 g of 2,4-di-tert-butyl-p-cresol was added to terminate the polymerization, then the solvent was removed by steam stripping, and the product was dried on rolls at 110°C to obtain a pre-modified polymer (butadiene rubber). Analysis of the obtained pre-modified polymer revealed, by infrared spectroscopy (Morello method), a 1,4-cis bond content of 97.0%, a 1,2-vinyl bond content of 1.1%, a molecular weight distribution (Mw/Mn) determined by gel permeation chromatography (GPC) of 2.3, and a Mooney viscosity (ML₁₊₄, 100°C) of 18.

Furthermore, the remaining polymer solution was maintained at 60°C, a toluene solution of 3-glycidoxypropyltrimethoxysilane (GPMOS) (4.5 mmol) was added, and the mixture was reacted for 30 minutes. Subsequently, a toluene solution of tetra-2-ethylhexyltitanate (EHOTi) (13.5 mmol) was added and mixed for 30 minutes. Thereafter, a methanol solution containing 1.5 g of 2,4-di-tert-butyl-p-cresol was added to obtain 2.5 kg of a modified polymer solution.

Next, the above modified polymer solution was added to 20 L of an aqueous solution adjusted to pH 10 with sodium hydroxide, and a condensation reaction was conducted at 110°C for 2 hours with simultaneous solvent removal, followed by drying on rolls at 110°C to obtain modified butadiene rubber (modified BR2). Analysis of the obtained modified butadiene rubber (modified BR2) revealed a molecular weight distribution (Mw/Mn) determined by GPC of 2.7 and a Mooney viscosity (ML₁₊₄, 125°C) of 43.

### <Synthesis Method of Modified BR3>

In a 5 L autoclave purged with nitrogen, 1.4 kg of cyclohexane, 250 g of 1,3-butadiene, and 0.285 mmol of 2,2-ditetrahydrofurylpropane as a cyclohexane solution were charged under a nitrogen atmosphere, and then 2.85 mmol of n-butyllithium (BuLi) was added. Polymerization was conducted for 4.5 hours in a 50°C water bath equipped with a stirrer. The conversion rate of 1,3-butadiene was nearly 100%. A portion of this polymer solution was withdrawn into a methanol solution containing 1.3 g of 2,6-di-tert-butyl-p-cresol to terminate the polymerization, then the solvent was removed by steam stripping, and the product was dried on rolls at 110°C to obtain pre-modified polybutadiene. Measurement of the microstructure (vinyl bond content) of the obtained pre-modified polybutadiene revealed a vinyl bond content of 30 mass%.

The obtained polymer solution was maintained at 50°C without deactivating the polymerization catalyst, and 1129 mg (3.364 mmol) of N,N-bis(trimethylsilyl)aminopropylmethyldiethoxysilane, in which the primary amino group was protected, was added, and the modification reaction was conducted for 15 minutes.

Thereafter, 8.11 g of tetrakis(2-ethyl-1,3-hexanediolato)titanium, as a condensation accelerator, was added, and stirring was continued for an additional 15 minutes.

Finally, 242 mg of silicon tetrachloride as a metal halide compound and 2,6-di-tert-butyl-p-cresol were added to the post-reaction polymer solution. Next, solvent removal and deprotection of the protected primary amino group were performed by steam stripping, and the rubber was dried using a roll heated to 110°C to obtain primary amine-modified butadiene rubber (modified BR3). Measurement of the microstructure (vinyl bond content) of the obtained modified butadiene rubber (modified BR3) revealed a vinyl bond content of 30 mass%.

### <Synthesis Method of Copolymer 1>

Under a nitrogen atmosphere, 65 parts by mass of cyclopentene, 35 parts by mass of 2-norbornene, 300 parts by mass of cyclohexane, and 0.066 parts by mass of 1-hexene were added to a glass reaction vessel equipped with a stirrer. Next, 0.024 parts by mass of ring-opening polymerization catalyst dichloro-(3-phenyl-1H-inden-1-ylidene)bis(tricyclohexylphosphine)ruthenium(II) dissolved in 1 part by mass of toluene was added, and a polymerization reaction was conducted at 20°C for 2 hours. After the polymerization reaction, the polymerization was terminated by adding an excess of vinyl ethyl ether. The polymerization solution was poured into a large excess of methanol containing 2,6-di-tert-butyl-p-cresol (BHT), the precipitated polymer was recovered, washed with methanol, and vacuum-dried at 50°C for 24 hours to obtain 67 parts by mass of copolymer 1.

### <Synthesis Method of Copolymer 2>

Under a nitrogen atmosphere, 77 parts by mass of cyclopentene, 23 parts by mass of dicyclopentadiene, 300 parts by mass of cyclohexane, and 0.069 parts by mass of 1-hexene were added to a glass reaction vessel equipped with a stirrer. Next, 0.024 parts by mass of ring-opening polymerization catalyst dichloro-(3-phenyl-1H-inden-1-ylidene)bis(tricyclohexylphosphine)ruthenium(II) dissolved in 1 part by mass of toluene was added, and a polymerization reaction was conducted at 40°C for 2 hours. After the polymerization reaction, the polymerization was terminated by adding an excess of vinyl ethyl ether. The polymerization solution was poured into a large excess of methanol containing 2,6-di-tert-butyl-p-cresol (BHT), the precipitated polymer was recovered, washed with methanol, and vacuum-dried at 50°C for 24 hours to obtain 60 parts by mass of copolymer 2.

### <Analysis of Copolymers>

The molecular weight of each synthesized copolymer and the proportion of structural units derived from each monomer were measured by the following methods. The results are presented in Table 1.

### (1) Molecular Weight

Using a gel permeation chromatography (GPC) system "HLC-8220" (manufactured by Tosoh Corporation), two H-type columns "HZ-M" (manufactured by Tosoh Corporation) were connected in series, and measurement was performed at a column temperature of 40°C using tetrahydrofuran as the solvent. As the detector, a differential refractometer "RI-8320" (manufactured by Tosoh Corporation) was used. The weight-average molecular weight (Mw) of the copolymer was measured as a polystyrene-equivalent value.

### (2) Proportion of Structural Units Derived from Each Monomer

The proportion of structural units derived from each monomer constituting the copolymer was determined from ¹H-NMR spectral measurements.

**[Table 1]**

| | | Copolymer 1 | Copolymer 2 |
|---|---|---|---|
| Weight-average molecular weight (Mw) | ×10³ | 247 | 258 |
| Structural units derived from cyclopentene | Mass % | 42.0 | 59.1 |
| Structural units derived from 2-norbornene | Mass % | 58.0 | - |
| Structural units derived from dicyclopentadiene | Mass % | - | 40.9 |

### <Preparation of Rubber Compositions>

Each component was blended and kneaded according to the formulation shown in Table 2 to prepare the rubber compositions of the examples and comparative examples.

In addition, to each rubber composition, as compounding agents other than the components listed in Table 2, 2 parts by mass of hydrogenated fatty acid, 3.5 parts by mass of zinc white, 2.5 parts by mass (total of two types) of antioxidant, 1 part by mass of resin, 1.4 parts by mass of sulfenamide vulcanization accelerator, and 1.05 parts by mass of sulfur were further blended per 100 parts by mass of the rubber component.

### <Evaluation of Rubber Compositions>

The obtained rubber compositions were evaluated for high fuel efficiency, wear resistance, and processability by the following methods. The results are presented in Table 2.

### (3) High Fuel Efficiency

The loss tangent (tan δ) of test pieces prepared from the obtained rubber compositions was measured under conditions of 50°C, 10% strain, and 15 Hz frequency using a viscoelasticity meter (TA Instruments). In addition, the modulus (M50) [MPa] at 50% strain of test pieces prepared from the obtained rubber compositions was measured at room temperature. The evaluation results were indexed by setting the tan δ/M50 of Comparative Example 3 (Comp. Ex. 3) to 100. The smaller the index value, the smaller the tan δ, indicating better high fuel efficiency.

### (4) Wear Resistance

In accordance with JIS K 6264-2:2005, wear volume at room temperature was measured using a Lambourn abrasion tester (manufactured by Ueshima Seisakusho Co., Ltd.), with sandpaper attached to the abrasive wheel and a slip rate of 12%. The evaluation results were indexed by setting the reciprocal of the wear volume of Comparative Example 3 (Comp. Ex. 3) to 100. The larger the index value, the smaller the wear volume, indicating better wear resistance.

### (5) Processability

Using an unvulcanized viscoelasticity meter "RPA2000" (manufactured by ALPHA TECHNOLOGIES), the dynamic storage (shear) modulus G' was measured under conditions of 130°C, 1° strain (twist angle), and 100 cpm frequency. The evaluation results were indexed by setting the value of Comparative Example 3 (Comp. Ex. 3) to 100. The smaller the index value, the lower the unvulcanized rubber viscosity, indicating better processability, and values of 145 or less were regarded as good.

**[Table 2]**

| | | | | | Ex. 1 | Ex. 2 | Ex. 3 | Ex. 4 | Ex. 5 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|---|
| Formulation | Rubber component | NR *1 | | Parts by mass | - | - | - | - | - | - | - | 60 | 60 | - |
| | | BR *2 | | | - | - | - | - | - | 40 | 40 | 40 | 40 | - |
| | | Modified polymer | Modified BR1 *3 | | 40 | 40 | - | - | - | - | - | - | - | - |
| | | | Modified BR2 *4 | | - | - | 40 | - | - | - | - | - | - | - |
| | | | Modified SBR *5 | | - | - | - | 40 | - | - | - | - | - | - |
| | | | Modified BR3 *6 | | - | - | - | - | 40 | - | - | - | - | - |
| | | Copolymer 1 *7 | | | 60 | - | - | - | - | 60 | - | - | - | - |
| | | Copolymer 2 *8 | | | - | 60 | 60 | 60 | 60 | - | 60 | - | - | 100 |
| | Carbon black 1 *9 | | | | 50 | 50 | 50 | 50 | 50 | 50 | 50 | 50 | 40 | - |
| | Carbon black 2 *10 | | | | - | - | - | - | - | - | - | - | - | 50 |
| Evaluation Results | High fuel efficiency | | | Index | 77 | 82 | 101 | 97 | 98 | 76 | 84 | 100 | 82 | 80 |
| | Wear resistance | | | Index | 249 | 193 | 216 | 120 | 159 | 130 | 117 | 100 | 57 | 41 |
| | Processability | | | Index | 74 | 80 | 101 | 107 | 89 | 154 | 147 | 100 | 92 | 143 |

| | | | | | | | | | | | | | | |
|---|---|---|---|---|---|---|---|---|---|---|---|---|---|---|
| *1 NR: natural rubber *2 BR: butadiene rubber, manufactured by UBE Elastomer Co., Ltd., trade name "BR150L" *3 Modified BR1: modified butadiene rubber synthesized by the above method *4 Modified BR2: modified butadiene rubber synthesized by the above method *5 Modified SBR: manufactured by ENEOS Materials Corporation, trade name "SL563", solution-polymerized styrene-butadiene rubber, Sn-modified *6 Modified BR3: modified butadiene rubber synthesized by the above method *7 Copolymer 1: copolymer of cyclopentene and norbornene compound synthesized by the above method *8 Copolymer 2: copolymer of cyclopentene and norbornene compound synthesized by the above method *9 Carbon black 1: carbon black with a cetyltrimethylammonium bromide (CTAB) adsorption specific surface area of 130 m²/g and a dibutyl phthalate (DBP) absorption amount of 140 mL/100 g *10 Carbon black 2: N234, manufactured by Tokai Carbon Co., Ltd., trade name "SEAST 7HM", CTAB adsorption specific surface area = 119 m²/g | | | | | | | | | | | | | | |

From the results presented in Table 2, it can be seen that the rubber compositions of the examples, which contain a copolymer of cyclopentene and a norbornene compound and a modified polymer, achieve a good balance among high fuel efficiency, wear resistance, and processability.

On the other hand, the rubber compositions of Comparative Examples 1 and 2, which contain a copolymer of cyclopentene and a norbornene compound but do not contain a modified polymer, exhibit significantly deteriorated processability, and the rubber composition of Comparative Example 5, which contains a copolymer of cyclopentene and a norbornene compound but does not contain a modified polymer, exhibits significantly deteriorated wear resistance.

## Claims

1. A rubber composition for a tire comprising a rubber component and a filler, wherein
the rubber component includes:
a copolymer of cyclopentene and a norbornene compound represented by general formula (1), shown below: 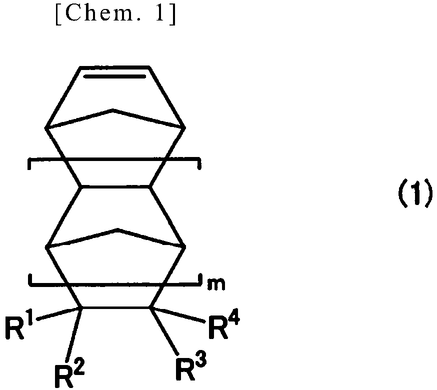 where, in general formula (1), R¹ to R⁴ each independently represent a hydrogen atom, a hydrocarbon group having 1 to 20 carbon atoms, or a substituent containing a halogen atom, a silicon atom, an oxygen atom, or a nitrogen atom, R² and R³ may be bonded to each other to form a ring, and m is an integer of 0 to 2; and
a modified polymer.

2. The rubber composition for a tire according to claim 1, wherein the norbornene compound represented by general formula (1) is 2-norbornene and/or dicyclopentadiene.

3. The rubber composition for a tire according to claim 1, wherein content of the copolymer of cyclopentene and the norbornene compound is 20 parts by mass to 90 parts by mass per 100 parts by mass of the rubber component.

4. The rubber composition for a tire according to claim 1, wherein the copolymer of cyclopentene and the norbornene compound has a weight-average molecular weight (Mw) of 200,000 to 1,000,000.

5. The rubber composition for a tire according to claim 1, wherein the copolymer of cyclopentene and the norbornene compound has a content ratio of structural units derived from cyclopentene of 20% by mass to 75% by mass.

6. The rubber composition for a tire according to claim 2, wherein the copolymer of cyclopentene and the norbornene compound has a content ratio of structural units derived from 2-norbornene of 10% by mass to 60% by mass.

7. The rubber composition for a tire according to claim 2, wherein the copolymer of cyclopentene and the norbornene compound has a content ratio of structural units derived from dicyclopentadiene of 10% by mass to 60% by mass.

8. The rubber composition for a tire according to claim 1, wherein content of the modified polymer is 5 parts by mass to 90 parts by mass per 100 parts by mass of the rubber component.

9. The rubber composition for a tire according to claim 1, wherein the modified polymer has a functional group containing nitrogen.

10. The rubber composition for a tire according to claim 1, wherein the modified polymer is a modified butadiene rubber or a modified styrene-butadiene rubber.

11. The rubber composition for a tire according to claim 1, wherein the modified polymer is a modified butadiene rubber.

12. The rubber composition for a tire according to claim 1, wherein the filler includes carbon black.

13. A tire comprising the rubber composition for a tire according to claim 1.
